# EUROPÄISCHE PATENTSCHRIFT

(11) **EP 3 387 789 B1**
(45) Veröffentlichungstag und Bekanntmachung des Hinweises auf die Patenterteilung: **13.11.2019**
(21) Anmeldenummer: 16808604.9
(22) Anmeldetag: 06.12.2016
(51) Int. Cl.: H04L 12/40

(54) **BUSANORDNUNG MIT EINER ERSTEN TEILNEHMERANORDNUNG UND VERFAHREN ZUM BETREIBEN EINER BUSANORDNUNG**
BUS ARRANGEMENT HAVING A FIRST SUBSCRIBER ARRANGEMENT AND METHOD FOR OPERATING A BUS ARRANGEMENT
SYSTÈME DE BUS COMPRENANT UN PREMIER ENSEMBLE D'ABONNÉS ET PROCÉDÉ POUR FAIRE FONCTIONNER UN SYSTÈME DE BUS

(30) Priorität: 07.12.2015 DE 102015121292
(43) Veröffentlichungstag der Anmeldung: 17.10.2018
(73) Patentinhaber: Eaton Intelligent Power Limited, Dublin 4 (IE)
(72) Erfinder: HANSING, Matthias, 53604 Bad Honnef (DE); HELLER, Franz, 53757 Sankt Augustin (DE); THIESSMEIER, Peter, 53343 Wachtberg (DE)
(74) Vertreter: Eaton IP Group EMEA
(86) Internationale Anmeldenummer: PCT/EP2016/079835
(87) Internationale Veröffentlichungsnummer: WO 2017/097737

(56) Entgegenhaltungen:
- EP-A1- 2 375 632
- EP-A2- 1 587 242
- EP-A2- 2 426 865
- US-A1- 2013 024 706

## Beschreibung

Die vorliegende Erfindung betrifft eine Busanordnung mit einer ersten Teilnehmeranordnung und ein Verfahren zum Betreiben einer Busanordnung.

Eine Busanordnung kann beispielsweise in der Automatisierungstechnik eingesetzt werden. Eine Busanordnung weist typisch einen Koordinator und mehrere Teilnehmer auf. Die Teilnehmer können als Aktoren oder Sensoren realisiert sein. Die Aktoren können Schaltgeräte wie Schütze, Motorstarter und Leistungsschalter, Befehlsgeräte und Frequenzumrichter sein.

Dokument EP 2426865 A2 beschreibt ein Endgerät, einen Koordinator und ein Verfahren zum Handhaben von Notfällen. Kommunikationsgeräte kommunizieren in einem Funknetzwerk mittels Funkübertragungen, die dasselbe Übertragungsmedium verwenden, üblicherweise die umgebende Atmosphäre. Ein Funknetzwerk kann auch als drahtloses Sensornetzwerk, wie etwa ein Körpernetzwerk, englisch: Body Area Network, realisiert sein. Ein Körpernetzwerk für medizinische Zwecke oder Unterhaltungsaufgaben weist eine Sternanordnung auf. Dabei kommuniziert ein Körpernetzwerk-Koordinator mit mehreren Bauteilen. Jedes Bauteil ist mit dem Körpernetzwerk-Koordinator mittels Funkübertragung verbunden.

Eine Aufgabe der vorliegenden Erfindung ist es, eine Busanordnung und ein Verfahren zum Betreiben einer Busanordnung bereitzustellen, bei denen Teilnehmer unterschiedlich an einen Bus angekoppelt sind.

Die Aufgabe wird mit den Gegenständen der unabhängigen Patentansprüche gelöst. Weiterbildungen und Ausgestaltungen sind jeweils Gegenstand der abhängigen Ansprüche.

In einer Ausführungsform umfasst eine Busanordnung einen Koordinator, einen ersten Teilnehmer, eine erste Teilnehmeranordnung mit einem zweiten Teilnehmer und einen Bus. Der Bus koppelt den Koordinator mit dem ersten und dem zweiten Teilnehmer. Der erste Teilnehmer ist zwischen dem Koordinator und dem zweiten Teilnehmer am Bus angeordnet. Dabei ist die Busanordnung derart ausgelegt, dass die erste Teilnehmeranordnung in einer Betriebsphase vom Bus abgekoppelt werden kann.

In einer Ausführungsform ist die Busanordnung nicht derart ausgelegt, dass der erste Teilnehmer in einer Betriebsphase vom Bus abgekoppelt werden kann.

Mit Vorteil führt der Koordinator die Betriebsphase auch nach Abkoppeln der ersten Teilnehmeranordnung weiter.

In einer Ausführungsform sind die erste Teilnehmeranordnung und damit der zweite Teilnehmer in einer Betriebsphase ab- und ankoppelbar. Somit sind die erste Teilnehmeranordnung und der zweite Teilnehmer hot-plug fähig. Hingegen ist der erste Teilnehmer nicht in einer Betriebsphase an- oder ankoppelbar. Der erste Teilnehmer ist nicht hot-plug fähig.

Die erste Teilnehmeranordnung kann auch Schublade, englisch Drawer, genannt werden.

In einer Ausführungsform gibt der Koordinator eine erste Fehlermeldung ab und/oder versetzt die Busanordnung in einen sicheren Zustand, falls der erste Teilnehmer zu einem ersten Zeitpunkt einer Betriebsphase aktiv ist und zu einem zweiten Zeitpunkt in derselben Betriebsphase entfernt oder inaktiv ist. Ein sicherer Zustand kann beispielsweise durch Ausschalten aller Teilnehmer der Busanordnung erreicht werden. Dabei liegt der zweite Zeitpunkt nach dem ersten Zeitpunkt.

In einer Ausführungsform registriert der Koordinator ein Abkoppeln der ersten Teilnehmeranordnung, falls der zweite Teilnehmer zu einem ersten Zeitpunkt einer Betriebsphase aktiv ist und zu einem zweiten Zeitpunkt in derselben Betriebsphase entfernt oder inaktiv ist. Dabei liegt der zweite Zeitpunkt nach dem ersten Zeitpunkt. Der Koordinator registriert das Abkoppeln der ersten Teilnehmeranordnung beispielsweise in einem nicht-flüchtigen semi-permanenten Speicher des Koordinators.

In einer Ausführungsform sind der erste Teilnehmer und die ersten Teilnehmeranordnung derart mechanisch miteinander gekoppelt, dass die erste Teilnehmeranordnung ohne Entfernen des ersten Teilnehmers vom Bus ab- und ankoppelbar ist und der erste Teilnehmer ohne Entfernen der ersten Teilnehmeranordnung vom Bus nicht ab- oder ankoppelbar ist. Somit ist verhindert, dass die erste Teilnehmeranordnung am Bus angeschlossen ist, ohne dass der erste Teilnehmer am Bus angeschlossen ist.

Der erste Teilnehmer kann als Kontrollabzweigung realisiert sein.

Der erste Teilnehmer kann eine vom Koordinator unabhängige Stromversorgung umfassen und die erste Teilnehmeranordnung mit elektrischer Energie versorgen.

Der erste Teilnehmer kann so realisiert sein, dass er mechanisch nur schwer von der Busanordnung getrennt werden kann.

In einer alternativen Ausführungsform setzt der Koordinator unterschiedliche Flags in dem nicht-flüchtigen semi-permanenten Speicher für den ersten und den zweiten Teilnehmer. Die Flags geben die Ab- und Ankoppelbarkeit in einer Betriebsphase an. Somit wird durch die Flags verhindert, dass die erste Teilnehmeranordnung am Bus angeschlossen ist und aktiviert wird, ohne dass der erste Teilnehmer am Bus angeschlossen ist.

In einer Ausführungsform umfasst der erste Teilnehmer einen ersten nicht-flüchtigen permanenten Speicher, in dem eine erste Seriennummer gespeichert ist. Weiter umfasst der zweite Teilnehmer einen zweiten nicht-flüchtigen permanenten Speicher, in dem eine zweite Seriennummer gespeichert ist.

In einer Ausführungsform weist der Koordinator in einer Konfigurationsphase dem ersten Teilnehmer eine erste Teilnehmeradresse und dem zweiten Teilnehmer eine zweite Teilnehmeradresse zu. Weiter fragt der Koordinator die erste und die zweite Seriennummer ab und speichert diese in einem nicht-flüchtigen semi-permanenten Speicher des Koordinators. Dabei kann der Koordinator zu jeder Teilnehmeradresse die jeweilige Seriennummer speichern. Im nicht-flüchtigen semi-permanenten Speicher sind die erste Teilnehmeradresse mit der ersten Seriennummer und die zweite Teilnehmeradresse mit der zweiten Seriennummer verknüpft und so weiter. Eine Teilnehmeradresse kann auch Teilnehmernummer genannt werden.

Mit Vorteil weisen der erste und der zweite Teilnehmer einzigartige Seriennummern auf. Da sich der erste Teilnehmer vom zweiten Teilnehmer anhand der jeweiligen Seriennummer unterscheidet, ist eine Adressierung der Teilnehmer über die Seriennummer möglich. Die erste Seriennummer ist eine global einzigartige Nummer, die während des Produktionsprozesses des ersten Teilnehmers im ersten Teilnehmer gespeichert wird. Entsprechend ist auch die zweite Seriennummer eine einzigartige Nummer, die während des Produktionsprozesses des zweiten Teilnehmers im zweiten Teilnehmer gespeichert wird.

In einer Ausführungsform ist der erste Teilnehmer über die erste Teilnehmeradresse und die erste Seriennummer adressierbar. Der zweite Teilnehmer kann ausschließlich über die zweite Teilnehmeradresse und nicht über die zweite Seriennummer adressierbar sein.

In einer Ausführungsform speichert der nicht-flüchtige semi-permanente Speicher des Koordinators die erste und die zweite Seriennummer remanent. Somit speichert der nicht-flüchtige semi-permanente Speicher des Koordinators auch bei einer Unterbrechung einer Stromversorgung des Koordinators die erste und die zweite Seriennummer weiter.

In einer Ausführungsform ist die Konfigurationsphase Teil einer Betriebsphase. Auf die Betriebsphase folgen eine Ausschaltphase und dann eine weitere Betriebsphase, welche mit einer Wiederanlaufphase beginnt. Im weiteren Verlauf können sich weitere Betriebsphasen, die jeweils zu Anfang eine Wiederanlaufphase aufweisen, und Ausschaltphasen abwechseln. Somit folgt die Wiederanlaufphase der Konfigurationsphase. Der Koordinator kann auch einen Befehl beispielsweise über einen Schalter des Koordinators erhalten, eine weitere Betriebsphase mit einer weiteren Konfigurationsphase zu beginnen.

In einer Ausführungsform nimmt der Koordinator in einer Wiederanlaufphase, die der Konfigurationsphase folgt, eine Verbindung zum ersten und zum zweiten Teilnehmer auf, fragt die erste und die zweite Seriennummer ab und vergleicht die abgefragte erste und zweite Seriennummer mit der im nicht-flüchtigen semi-permanenten Speicher des Koordinators gespeicherten ersten und zweiten Seriennummer. Der Koordinator kann zum Beispiel ein Signal mit eine Fehlermeldung abgeben, wenn eine oder beide abgefragte Seriennummern von den gespeicherten Seriennummern abweichen. Mit diesem Signal kann der Koordinator einen Betreiber der Busanordnung oder eine der Busanordnung übergeordnete Steuerung informieren, dass einer der Teilnehmer ausgetauscht worden ist.

Eine Ausschaltphase geht der Wiederanlaufphase voraus. Durch den Austausch des ersten oder zweiten Teilnehmers ändert sich eine der Seriennummern. Mit Vorteil kann somit der Koordinator feststellen, ob beispielsweise in der Ausschaltphase vor der Wiederanlaufphase ein Teilnehmer ausgetauscht wurde.

In einer Ausführungsform wird der Austausch des ersten Teilnehmers in einer Ausschaltphase ausschließlich dann zugelassen, wenn nach dem Austausch eine weitere Konfigurationsphase durchgeführt wird.

In einer Ausführungsform wird der erste Teilnehmer in einer Ausschaltphase, die zwischen der Konfigurationsphase und der weiteren Konfigurationsphase liegt, gegen einen weiteren ersten Teilnehmer ausgetauscht wird. Der Koordinator nimmt in der weiteren Konfigurationsphase eine Verbindung zum weiteren ersten Teilnehmer auf, fragt eine Seriennummer des weiteren ersten Teilnehmer ab und speichert diese im nicht-flüchtigen semi-permanenten Speicher anstelle der ersten Seriennummer. Somit tritt der weitere erste Teilnehmer an die Stelle des ersten Teilnehmers.

In einer Ausführungsform umfasst der Koordinator einen Schalter. Der Koordinator führt die weitere Konfigurationsphase nach Betätigung des Schalters durch.

In einer Ausführungsform kann der Koordinator in eine Austauschbetriebsphase oder Austauschmodus oder Austauschbetriebsart versetzt werden. Befindet sich der Koordinator in der Austauschbetriebsphase, so nimmt der Koordinator eine Verbindung zum zweiten Teilnehmer auf, fragt die zweite Seriennummer ab und speichert die abgefragte zweite Seriennummer im nicht-flüchtigen semi-permanenten Speicher anstelle der bisher gespeicherten zweiten Seriennummer. Beispielsweise kann in einer Austauschbetriebsphase der erste Teilnehmer nicht ausgetauscht werden, da dies ausschließlich in einer weiteren Konfigurationsphase erfolgt. Es ist jedoch in der Austauschbetriebsphase der Austausch der ersten oder einer weiteren Teilnehmeranordnung oder einzelner Teilnehmer in der ersten oder einer weiteren Teilnehmeranordnung möglich.

In einer Ausführungsform umfasst die Busanordnung einen zusätzlichen Teilnehmer, der in der Konfigurationsphase am Bus zwischen dem Koordinator und dem ersten Teilnehmer angeschlossen ist und nach der Konfigurationsphase entfernt wird. Der Koordinator adressiert in einer Wiederanlaufphase nach der Konfigurationsphase den ersten Teilnehmer über die erste Seriennummer und weist ihm eine erste Teilnehmeradresse zu.

Mit Vorteil wird die Lücke, die durch das Entfernen des zusätzlichen Teilnehmers entsteht, durch die Adressierung des ersten Teilnehmers mit seiner ersten Seriennummer überbrückt.

Der zusätzliche Teilnehmer kann Teil einer weiteren Teilnehmeranordnung sein. Der zusätzliche Teilnehmer kann der direkte Vorgänger des ersten Teilnehmers sein.

In einer Ausführungsform aktiviert in der Wiederanlaufphase der erste Teilnehmer den zweiten Teilnehmer. Der Koordinator weist die zweite Teilnehmeradresse dem zweiten Teilnehmer zu und fragt die zweite Seriennummer ab. Falls die abgefragte zweite Seriennummer mit der im nicht-flüchtigen semi-permanenten Speicher des Koordinators gespeicherten, zweiten Seriennummer übereinstimmt, aktiviert der Koordinator den zweiten Teilnehmer. Ansonsten gibt der Koordinator eine Fehlermeldung aus und/oder deaktiviert den zweiten Teilnehmer.

In einer Ausführungsform umfasst der Bus eine erste Signalleitung, die den ersten Teilnehmer und den Koordinator koppelt, und eine zweite Signalleitung, die den zweiten Teilnehmer an den ersten Teilnehmer anschließt. Der Bus umfasst mindestens eine Busleitung, die den Koordinator mit dem ersten und dem zweiten Teilnehmer verbindet.

In einer Ausführungsform aktiviert der Koordinator in der Konfigurationsphase über die erste Signalleitung den ersten Teilnehmer und sendet über die mindestens eine Busleitung ein Telegramm, das eine erste Teilnehmeradresse enthält, an alle Teilnehmer und damit auch an den ersten und den zweiten Teilnehmer. Der erste Teilnehmer speichert die erste Teilnehmeradresse in einem ersten flüchtigen Speicher des ersten Teilnehmers. Mit Vorteil speichert ausschließlich der erste Teilnehmer die über die mindestens eine Busleitung bereitgestellte erste Teilnehmeradresse, da ausschließlich der erste Teilnehmer aktiviert ist. Ein derartiges über die Busleitung an alle Teilnehmer abgesandtes Telegramm kann auch als Broadcast-Nachricht bezeichnet werden. Da der erste Teilnehmer die erste Teilnehmeradresse nunmehr in der Betriebsphase, die von der Konfigurationsphase eingeleitet wurde, weiter im ersten flüchtigen Speicher speichert, kann er mittels der ersten Teilnehmeradresse adressiert werden. Die Aktivierung des ersten Teilnehmers kann direkt vom Koordinator erfolgen oder, falls ein zusätzlicher oder weitere Teilnehmer zwischen dem Koordinator und dem ersten Teilnehmer angeordnet sind, über den dem ersten Teilnehmer vorangehenden Teilnehmer.

In einer Ausführungsform aktiviert der erste Teilnehmer in der Konfigurationsphase den zweiten Teilnehmer über die zweite Signalleitung. Weiter sendet der Koordinator über die mindestens eine Busleitung ein Telegramm, das eine zweite Teilnehmeradresse enthält, an alle Teilnehmer. Der zweite Teilnehmer speichert die zweite Teilnehmeradresse in einem zweiten flüchtigen Speicher des zweiten Teilnehmers. Mit Vorteil speichert ausschließlich der zweite Teilnehmer die zweite Teilnehmeradresse, da ausschließlich zu diesem Zeitpunkt der zweite Teilnehmer aktiviert ist.

In einer Ausführungsform erkennt der Koordinator einen Ausfall des ersten und/oder des zweiten Teilnehmers und speichert die Information über den Ausfall des ersten und/oder des zweiten Teilnehmers im nicht-flüchtigen semi-permanenten Speicher. Der Koordinator registriert die ausgefallenen Teilnehmer als ausgefallen. Der Ausfall eines Teilnehmers kann beispielsweise durch einen Defekt im Teilnehmer oder durch die Wegnahme des Teilnehmers und damit ein Fehlen des Teilnehmers ausgelöst sein. Somit werden im nicht-flüchtigen semi-permanenten Speicher des Koordinators zu jeder Teilnehmeradresse sowohl die zugehörige Seriennummer wie auch die Information, ob der Teilnehmer ausgefallen ist oder ob er aktiv ist, gespeichert.

In einer Ausführungsform kann der Koordinator einen oder mehrere ausgefallene Teilnehmer wieder aktivieren. Die Aktivierung kann dabei in Vorwärtsrichtung wie auch in Rückwärtsrichtung erfolgen. Die Teilnehmer der ersten Teilnehmeranordnung wie etwa der zweite Teilnehmer können selbsttätig vom Koordinator wieder aktiviert werden.

In einer Ausführungsform kann der erste Teilnehmer jedoch nicht vom Koordinator selbsttätig nach einem Ausfall aktiviert werden. Beim Ausfall des ersten Teilnehmers gibt der Koordinator beispielsweise ein Signal mit einer ersten Fehlermeldung ab und/oder versetzt die Busanordnung in einen sicheren Zustand.

In einer Ausführungsform ist beispielsweise der zweite Teilnehmer ausgefallen und der erste Teilnehmer funktionsfähig. Nach der Speicherung der Information über den Ausfall des zweiten Teilnehmers kann der Koordinator über die mindestens eine Busleitung den ersten Teilnehmer beauftragen, den zweiten Teilnehmer zu aktivieren. Der Koordinator kann ein Telegramm, das die zweite Teilnehmeradresse enthält, an alle Teilnehmer absenden. Da der zweite Teilnehmer aktiviert ist, speichert der zweite Teilnehmer die zweite Teilnehmeradresse im zweiten flüchtigen Speicher. Weiter bestätigt der zweite Teilnehmer die Aktivierung gegenüber dem Koordinator. Der Koordinator fragt die Seriennummer des zweiten Teilnehmers ab und vergleicht die abgefragte Seriennummer mit der im nicht-flüchtigen semi-permanenten Speicher gespeicherten zweiten Seriennummer. Stimmen die beiden Seriennummern überein, so kann der Koordinator die Information über die Einsatzfähigkeit des zweiten Teilnehmers im nicht-flüchtigen semi-permanenten Speicher registrieren.

Mit Vorteil versucht der Koordinator, den zweiten Teilnehmer wieder in den Busbetrieb aufzunehmen. Dabei wird so vermieden, dass an die Stelle des zweiten Teilnehmers irgendein Teilnehmer an den Bus angekoppelt wird. Die Sicherheit des Automatisierungssystems wird somit erhöht.

In einer Ausführungsform erkennt der Koordinator den Ausfall des zusätzlichen Teilnehmers und speichert die Information über den Ausfall des zusätzlichen Teilnehmers im nicht-flüchtigen semi-permanenten Speicher. Der zusätzliche Teilnehmer ist der direkte Vorgänger des ersten Teilnehmers am Bus. Nach der Speicherung der Information über den Ausfall des zusätzlichen Teilnehmers kann der Koordinator über die mindestens eine Busleitung ein Telegramm an die Seriennummer des zusätzlichen Teilnehmers richten und dadurch den zusätzlichen Teilnehmer beauftragen, den ersten Teilnehmer zu aktivieren. Der erste Teilnehmer bestätigt die Aktivierung gegenüber dem Koordinator.

Der Koordinator kann beispielsweise ein Telegramm, das an die Seriennummer des zusätzlichen Teilnehmers adressiert ist und die Teilnehmeradresse des zusätzlichen Teilnehmers enthält, absenden. Da der zweite Teilnehmer über seine Seriennummer adressiert wird, speichert der zusätzliche Teilnehmer seine Teilnehmeradresse in einem flüchtigen Speicher. Der Koordinator kann die Information über die Einsatzfähigkeit des zusätzlichen Teilnehmers im nicht-flüchtigen semi-permanenten Speicher speichern.

Mit Vorteil versucht der Koordinator, den zusätzlichen Teilnehmer wieder in den Busbetrieb aufzunehmen. Dieser wird jedoch nur in den Busbetreib wieder integriert, wenn seine geographische Position am Bus mit Hilfe des ersten Teilnehmers festgestellt wurde. Folglich wird verhindert, dass an die Stelle des zusätzlichen Teilnehmers irgendein anderer Teilnehmer an den Bus angekoppelt wird. Die Sicherheit des Automatisierungssystems wird somit erhöht. Der Koordinator führt eine Rückwärtsadressierung des zusätzlichen Teilnehmers über den ersten Teilnehmer durch.

In einer Ausführungsform schließt die erste Signalleitung den ersten Teilnehmer an den Koordinator an. Der erste Teilnehmer und der Koordinator sind somit direkt und permanent über die erste Signalleitung aneinander angeschlossen.

In einer Ausführungsform ist der zweite Teilnehmer direkt und permanent über die zweite Signalleitung an den ersten Teilnehmer angeschlossen. Der zweite Teilnehmer ist nicht direkt an die erste Signalleitung angeschlossen. Der zweite Teilnehmer ist ausschließlich über den ersten Teilnehmer mit der ersten Signalleitung gekoppelt. Entsprechend ist der Koordinator nicht direkt an die zweite Signalleitung angeschlossen. Der Koordinator ist über den ersten Teilnehmer mit der zweiten Signalleitung gekoppelt.

An die mindestens eine Busleitung ist sowohl der Koordinator wie auch der erste Teilnehmer als auch der zweite Teilnehmer direkt angeschlossen.

In einer Ausführungsform ist die mindestens eine Busleitung des Busses als genau eine Busleitung realisiert.

In einer alternativen Ausführungsform weist der Bus die mindestens eine Busleitung sowie eine weitere Busleitung auf. Somit weist der Bus genau zwei Busleitungen, nämlich eine erste und eine zweite Busleitung, auf. Die erste und die zweite Busleitung können gemäß dem Schnittstellen-Standard TIA/EIA-485 A, auch EIA-485 oder RS-485 bezeichnet, betrieben werden.

In einer Ausführungsform umfasst die Busanordnung einen oder mehrere weitere Teilnehmer, die an die mindestens eine Busleitung angeschlossen sind. Ein weiterer Teilnehmer kann über eine dritte Signalleitung an den zweiten Teilnehmer angeschlossen sein. Der oder die weiteren Teilnehmer können jedoch auch beispielsweise zwischen dem Koordinator und dem ersten Teilnehmer angeordnet sein.

In einer Ausführungsform ist mindestens einer der Teilnehmer als Aktor, Messgerät oder Sensor realisiert. Der Aktor kann ein Schaltgerät - wie ein Schütz, ein Motorstarter oder ein Leistungsschalter -, ein Stellgerät, ein Befehlsgerät, ein Meldegerät, ein Bediengerät oder ein Frequenzumrichter sein.

In einer Ausführungsform vergleicht der Koordinator die im nicht-flüchtigen semi-permanenten Speicher gespeicherte erste Seriennummer mit der in diesem Speicher gespeicherten zweiten Seriennummer. Der Koordinator stellt ein Signal in Abhängigkeit des Vergleichsergebnisses bereit. Das Signal repräsentiert somit die Information, ob die zwei Seriennummern identisch sind. Bei identischen Seriennummern liegt ein Fehlerfall vor.

Im Fall, dass die Busanordnung den ersten und den zweiten Teilnehmer sowie einen weiteren Teilnehmer mit einer weiteren Seriennummer oder mehrere weitere Teilnehmer mit mehreren weiteren Seriennummer umfasst, vergleicht der Koordinator die erste und die zweite Seriennummer sowie die weitere oder die weiteren Seriennummern miteinander. Der Koordinator stellt das Signal bereit, das die Information repräsentiert, dass mindestens zwei Seriennummern identisch sind.

Der erste und der zweite nicht-flüchtige permanente Speicher der Teilnehmer und ein nicht-flüchtiger permanenter Speicher des Koordinators können z.B. Speicher wie etwa ein Read Only Memory, abgekürzt ROM, ein Programmable Read Only Memory, abgekürzt PROM, oder ein One Time Programmable Baustein, kurz OTP Baustein, sein.

Ein erster und ein zweiter nicht-flüchtiger semi-permanenter Speicher der Teilnehmer und der nicht-flüchtige semi-permanente Speicher des Koordinators können beispielsweise Speicher wie etwa ein Electrically Erasable Programmable Read Only Memory, abgekürzt EEPROM, oder ein Flash-EEPROM sein. Der erste und der zweite nicht-flüchtige semi-permanente Speicher der Teilnehmer und der nicht-flüchtige semi-permanente Speicher des Koordinators verlieren ihren Speicherinhalt in einer Ausschaltphase nicht.

Der erste und der zweite flüchtige Speicher der Teilnehmer und ein flüchtiger Speicher des Koordinators können beispielsweise als Random Access Memory, abgekürzt RAM, oder Flash-Speicher implementiert sein. Das RAM kann etwa als Dynamic Random Access Memory, abgekürzt DRAM, oder Static Random Access Memory, abgekürzt SRAM, realisiert sein. Der erste und der zweite flüchtige Speicher und der flüchtige Speicher des Koordinators verlieren in der Ausschaltphase ihren Speicherinhalt.

In einer Ausführungsform umfasst ein Verfahren zum Betreiben einer Busanordnung die Schritte: Eine erste Teilnehmeranordnung wird von einem Bus in einer Betriebsphase abgekoppelt. Ein Koordinator betreibt die Busanordnung weiter. Die Busanordnung umfasst den Koordinator, den Bus, den ersten Teilnehmer und die erste Teilnehmeranordnung mit einem zweiten Teilnehmer. Der Bus koppelt den Koordinator mit dem ersten und dem zweiten Teilnehmer. Der erste Teilnehmer ist zwischen dem Koordinator und dem zweiten Teilnehmer am Bus angeordnet.

Mit Vorteil ist die erste Teilnehmeranordnung im laufenden Betrieb abkoppelbar. Mit Vorteil kann die Busanordnung eine Austauschphase oder Austauschbetriebsart, englisch Replacement Mode, aufweisen.

In einer Ausführungsform gibt beim Abkoppeln eines ersten Teilnehmers vom Bus in einer Betriebsphase der Koordinator eine erste Fehlermeldung und/oder versetzt die Busanordnung in einen sicheren Zustand.

In einer Ausführungsform ist die erste Teilnehmeranordnung als Schublade oder Einschubkasten realisiert. Die Busanordnung ist in einem Schrank, etwa einem Schaltschrank, aufgebaut. Die erste Teilnehmeranordnung kann wie eine Schublade oder Einschubkasten im Schrank herausgezogen und wieder eingesetzt werden.

In einer Ausführungsform ist der Austausch der ersten Teilnehmeranordnung Online und Offline möglich. Eine Neukonfiguration ist nicht nötig für den Austausch. Eine Konfigurationsphase ist zum Austausch nicht erforderlich. Teilnehmeranordnungen hinter einer oder hinter mehreren an unabhängigen Positionen gezogenen Teilnehmeranordnungen können auch nach einem Power Up wieder an den Bus koppeln.

In einer Ausführungsform kann der Koordinator den ersten Teilnehmer und den zweiten Teilnehmer in der ersten Teilnehmeranordnung mittels Teilnehmeradresse und mittels Seriennummer adressieren. Die Teilnehmeradresse wird einer eindeutigen Hardware Seriennummer zugeordnet.

In einer Ausführungsform bilden der Koordinator und die Teilnehmer eine Reihenschaltung oder Kette, die als Daisy-Chain bezeichnet werden kann. Somit bilden der Koordinator und die Teilnehmer eine Daisy-Chain-Anordnung oder einen Daisy-Chain-Bus. Der Koordinator und die Teilnehmer sind seriell über die Signalleitungen verbunden. Der erste Teilnehmer kann direkt an den Koordinator angeschlossen sein. Die weiteren Teilnehmer sind jeweils an ihre Vorgänger angeschlossen.

Mit Vorteil können auch Teilnehmer hinter einer Daisy Chain Signal Lücke verwechslungsfrei aufgenommen werden. Der erste Teilnehmer und gegebenenfalls weitere Teilnehmer sind geographisch fix installierte Teilnehmer und können zusätzlich als Startpunkt für eine Rückwärtsadressierung verwendet werden.

Mit Vorteil wird durch die Busanordnung und das Verfahren die Praxistauglichkeit einer automatischen Adressierung von Teilnehmern in einem Bussystem verbessert. Die automatische Adressierung bietet eine Reihe von Möglichkeiten. So kann z. B. eine Schublade, die z.B. mindestens zwei Teilnehmer in aufsteigender Adressfolge und geografisch zusammenfasst, nicht nur Online sondern auch Offline ausgetauscht werden, ohne eine neue Konfiguration am Koordinator veranlassen zu müssen. Alle Schubladen hinter einer oder mehreren an unabhängigen Positionen gezogenen Schubladen können auch nach einem Power Up wieder ankoppeln.

Die Busanordnung kann auch Bussystem bezeichnet werden. Die Busanordnung kann ein Adressierungsverfahren über Daisy-Chain und über die eindeutige Seriennummer durchführen, so dass bei einem Wiederanlauf eine Überprüfung der korrekten Position eines Teilnehmers am Bus möglich ist.

Bei jeder ersten Inbetriebnahme der Busanordnung wird ein Verfahren über Daisy-Chain verwendet. Alle Teilnehmer am Bus werden vom Koordinator mit aufsteigender Adressfolge adressiert. In diesem Verfahren wird von jedem Busteilnehmer eine eindeutige Seriennummer abgefragt, die in einer integrierten Schaltung, die unter anderem die Buskommunikation ausübt, abgespeichert ist. Dabei wird in dieser integrierten Schaltung eine global einzigartige Nummer während des Produktionsprozesses eingespeichert. Die integrierte Schaltung kann als applikationsspezifische integrierte Schaltung, abgekürzt ASIC, realisiert sein. Die integrierte Schaltung kann den Transceiver und den nicht-flüchtigen permanenten Speicher des Teilnehmers umfassen. Außerdem wird eine Geräte-Identität (Hersteller, Gerät), englisch (Vendor, Device) ausgelesen, die den Typ des Geräts angibt (z.B. Eaton, Schalter, 200 Ampere, Typ-Nummer). Das Adressierungsverfahren endet am ersten fehlenden Teilnehmer bzw. am letztmöglich zu adressierenden Teilnehmer. Die dazugehörige, eindeutige Seriennummer eines jeden adressierten Teilnehmers wird zusammen mit seiner Teilnehmeradresse beim Koordinator remanent gespeichert.

Über dieses Verfahren lassen sich Bussegmente wie etwa Teilnehmeranordnungen abschalten, wieder einschalten, aber auch in einem dafür vorgesehenen Austauschbetriebsmodus austauschen. Dabei steht die Daisy-Chain für die geographische Position und über die gespeicherten Geräte-Identität (Hersteller, Gerät) ist im Austauschbetriebsmodus der Geräteersatz möglich. Die neue Seriennummer der ausgetauschten Geräte bzw. Teilnehmer werden dann in der remanenten Konfiguration des Koordinators ausgetauscht.

Beispielsweise wird bei einem Wiederanlauf des Koordinators über die Daisy-Chain die Hardware Seriennummer eines Teilnehmers, die bei der Erstkonfiguration ermittelt wurde, mit der remanent im Koordinator gespeicherten Seriennummer verifiziert. Damit ist eine Falschadressierung etwa eines an falscher Stelle eingesetzten Teilnehmers vermieden. Alle Seriennummern in der Busanordnung werden geprüft, um eine Doppeladressierung zu vermeiden.

Werden ein oder mehrere Teilnehmer nicht erkannt, z.B. durch Unterbrechung der Daisy-Chain (etwa bei fehlendem oder fehlerhaftem Teilnehmer), kann mit der eindeutigen Hardware Seriennummer die Adressierung beim ersten Teilnehmer oder einem weiteren nicht austauschbaren Teilnehmer fortgesetzt werden. Dieses Verfahren wird auch bei Ausfall von Teilnehmeranordnungen oder Teilnehmern in einer Teilnehmeranordnung und der Wiederankopplung von Teilnehmeranordnungen oder Teilnehmern in einer Teilnehmeranordnung als Option im Betrieb verwendet.

Die Erfindung wird im Folgenden an mehreren Ausführungsbeispielen anhand der Figuren näher erläutert. Funktions- beziehungsweise wirkungsgleiche Komponenten oder Funktionseinheiten tragen gleiche Bezugszeichen. Insoweit sich Komponenten oder Funktionseinheiten in ihrer Funktion entsprechen, wird deren Beschreibung nicht in jeder der folgenden Figuren wiederholt. Es zeigen:
- Figuren 1 und 2: beispielhafte Ausführungsformen einer Busanordnung,
- Figuren 3A bis 3H: eine beispielhafte Ausführungsform einer Busanordnung in verschiedenen Phasen und
- Figur 4: eine beispielhafte zeitliche Abfolge von Phasen in einer Busanordnung.

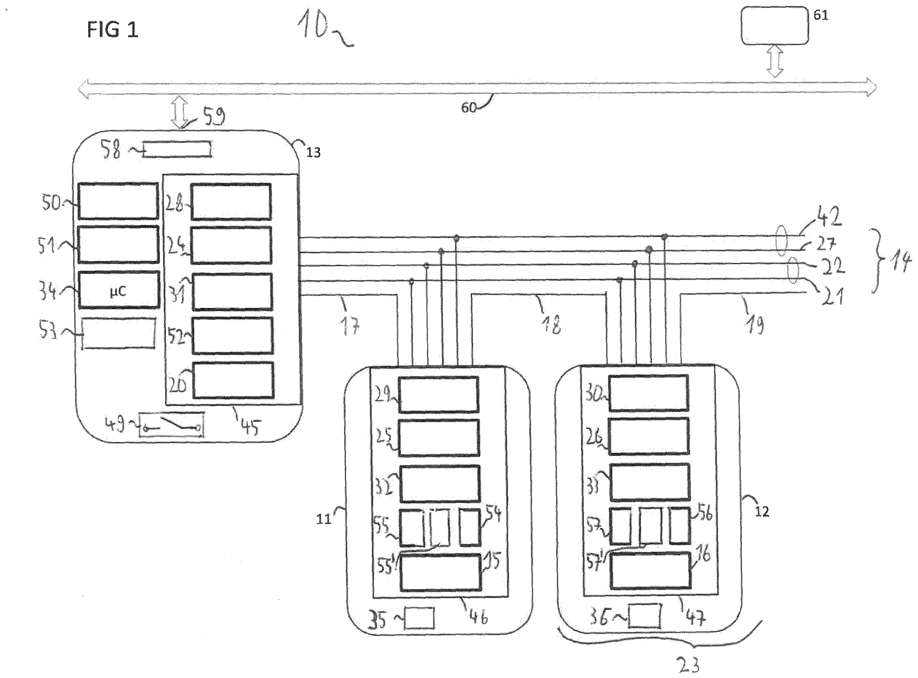

Figur 1 zeigt eine beispielhafte Ausführungsform einer Busanordnung 10, die einen ersten und einen zweiten Teilnehmer 11, 12, einen Koordinator 13 und einen Bus 14 umfasst. Der Koordinator 13 ist mit dem ersten und dem zweiten Teilnehmer 11, 12 über den Bus 14 verbunden. Der erste und der zweite Teilnehmer 11, 12 weisen jeweils einen Prozessorkern 15, 16 auf. Der Bus 14 umfasst eine erste Signalleitung 17, die einen Anschluss des Koordinators 13 mit einem Anschluss des ersten Teilnehmers 11 und damit beispielsweise mit einem Anschluss des Prozessorkerns 15 des ersten Teilnehmers 11 verbindet. Die erste Signalleitung 17 ist nicht direkt an den zweiten oder einen weiteren Teilnehmer 12 angeschlossen. Aus Gründen der Übersichtlichkeit sind die Leitungen im Koordinator 13 und im ersten und zweiten Teilnehmer 11, 12 nicht eingezeichnet.

Weiter umfasst der Bus 14 eine zweite Signalleitung 18, die einen Anschluss des ersten Teilnehmers 11 an einen Anschluss des zweiten Teilnehmers 12 anschließt. Beispielsweise verbindet die zweite Signalleitung 18 den Prozessorkern 15 des ersten Teilnehmers 11 mit dem Prozessorkern 16 des zweiten Teilnehmers 12. Zusätzlich kann der Bus 14 eine dritte Signalleitung 19 umfassen, die einen Anschluss des zweiten Teilnehmers 12 mit einem nicht gezeigten dritten Teilnehmer verbindet. Der Koordinator 13 umfasst einen Prozessorkern 20, der an die erste Signalleitung 17 angeschlossen ist. Der Bus 14 ist als linearer Bus realisiert. Der Bus 14 kann als serieller Bus ausgebildet sein. Der Koordinator 13 kann als Master implementiert sein. Die Teilnehmer 11, 12 können als Slaves oder Devices realisiert sein. Der Prozessorkern 15, 16, 20 kann als Mikroprozessor implementiert sein.

Die Busanordnung 10 umfasst eine erste Teilnehmeranordnung 23, die mindestens den zweiten Teilnehmer 12 umfasst. Sie kann z.B. auch den nicht gezeigten dritten Teilnehmer umfassen. Die Busanordnung 10 ist derart konfiguriert, dass die erste Teilnehmeranordnung 23 in einer Betriebsphase B vom Bus 14 abgekoppelt werden kann. Hingegen ist die Busanordnung 10 nicht derart konfiguriert, dass der erste Teilnehmer 11 in einer Betriebsphase B vom Bus 14 abgekoppelt werden kann, zumindest nicht ohne eine erste Fehlermeldung und/oder ein Abschalten der Busanordnung 10 auszulösen.

Der Prozessorkern 20 des Koordinators 13 ist über eine Signalleitungsschaltung 31 des Koordinators 13 an die erste Signalleitung 17 angeschlossen. Weiter ist der Prozessorkern 15 des ersten Teilnehmers 11 über eine Signalleitungsschaltung 32 des ersten Teilnehmers 11 an die erste und die zweite Signalleitung 17, 18 angeschlossen. Der Prozessorkern 16 des zweiten Teilnehmers 12 ist über eine Signalleitungsschaltung 33 des zweiten Teilnehmers 12 an die zweite und falls vorhanden auch an die dritte Signalleitung 18, 19 angeschlossen.

Darüber hinaus umfasst der Bus 14 mindestens eine Busleitung 21, die den Koordinator 13 mit allen Teilnehmern und somit mit dem ersten und dem zweiten Teilnehmer 11, 12 verbindet. Ein Signal auf der mindestens einen Busleitung 21 erreicht alle Teilnehmer 11, 12. Der Bus 14 kann eine weitere Busleitung 22 umfassen, die den Koordinator 13 mit allen Teilnehmern 11, 12 verbindet. Die mindestens eine Busleitung 21 und die weitere Busleitung 22 können auch als erste und zweite Busleitung bezeichnet werden. Der Koordinator 13 umfasst einen Transceiver 24, der den Prozessorkern 20 mit der ersten und der zweiten Busleitung 21, 22 koppelt. Der erste und der zweite Teilnehmer 11, 12 umfassen ebenfalls jeweils einen Transceiver 25, 26 mit zwei Anschlüssen, die an die erste und die zweite Busleitung 21, 22 angeschlossen sind. Im ersten und zweiten Teilnehmer 11, 12 ist der Transceiver 25, 26 jeweils mit dem Prozessorkern 15, 16 gekoppelt. Die erste und die zweite Busleitung 21, 22 sowie die Transceiver 24 - 26 des Koordinators 13 und der Teilnehmer 11, 12 können gemäß dem Schnittstellen-Standard TIA/EIA-485 A, auch EIA-485 oder RS-485 bezeichnet implementiert sein. Die Transceiver 24 - 26 des Koordinators 13 und der Teilnehmer 11, 12 können als Bus-Transceiver oder als Sende- und Empfangs-Transceiver ausgelegt und für den Halbduplexbetrieb realisiert sein.

Zusätzlich umfasst der Bus 14 eine Versorgungsleitung 27, die eine Spannungsversorgung 28 des Koordinators 13 mit einer Spannungsversorgung 29 des ersten Teilnehmers 11 und einer Spannungsversorgung 30 des zweiten Teilnehmers 12 verbindet. Die Spannungsversorgung 28, 29, 30 kann jeweils als Spannungsregulator realisiert sein.

Weiter kann der erste und der zweite Teilnehmer 11, 12 jeweils eine Applikationseinrichtung 35, 36 aufweisen. Die Applikationseinrichtung 35, 36 kann als Aktor-, Messgeräts- oder Sensor-Einrichtung implementiert sein. Somit können der erste und der zweite Teilnehmer 11, 12 als Aktor, Messgerät und/oder Sensor realisiert sein. Die Applikationseinrichtung 35 des ersten Teilnehmers 11 ist mit dem Prozessorkern 15 des ersten Teilnehmers 11 gekoppelt. Entsprechendes gilt für den zweiten Teilnehmer 12. Ferner umfasst der Bus 14 eine Bezugspotentialleitung 42, die einen Bezugspotentialanschluss des Koordinators 13 mit Bezugspotentialanschlüssen des ersten und des zweiten Teilnehmers 11, 12 verbindet. Die Versorgungsleitung 27 und die Bezugspotentialleitung 42 dienen der Spannungsversorgung der Teilnehmer 11, 12 durch den Koordinator 13.

Darüber hinaus umfasst der Koordinator 13 einen Speicher 53, der mit dem Prozessorkern 20 oder einem Mikrocontroller 34 des Koordinators 13 verbunden ist. Der Speicher 53 kann als nicht-flüchtiger semi-permanenter Speicher realisiert sein. Weiter umfasst der Koordinator 13 einen flüchtigen Speicher 52. Der erste Teilnehmer 11 umfasst einen ersten flüchtigen Speicher 54, einen ersten nicht-flüchtigen permanenten Speicher 55 und einen ersten nicht-flüchtigen semi-permanenten Speicher 55'. Die Speicher 54, 55 können an den Transceiver 25 angeschlossen sein. Der zweite Teilnehmer 12 umfasst einen zweiten flüchtigen Speicher 56, einen zweiten nicht-flüchtigen permanenten Speicher 57 und einen zweiten nicht-flüchtigen semi-permanenten Speicher 57'. Die Speicher 56, 57 können an den Transceiver 26 angeschlossen sein.

Der Transceiver 25 des ersten Teilnehmers 11 erkennt eine erste Teilnehmeradresse, die im ersten flüchtigen Speicher 54 gespeichert ist, und eine erste Seriennummer, die im ersten nicht-flüchtigen permanenten Speicher 55 gespeichert ist, sodass der erste Teilnehmer 11 die Daten im Telegramm verarbeitet. Der erste Teilnehmer 11 kann somit durch ein Telegramm, das ausschließlich die erste Teilnehmeradresse sowie Daten enthält, angesprochen werden wie auch durch ein Telegramm, das ausschließlich die erste Seriennummer sowie Daten enthält. Der erste Teilnehmer 11 kann somit auf zweierlei Art und Weise über die mindestens eine Busleitung 21 adressiert werden. Zusätzlich kann der erste Teilnehmer 11 auch über die erste Signalleitung 17 aktiviert werden. Auch der zweite Teilnehmer 12 kann die zweite Teilnehmeradresse, die im zweiten flüchtigen Speicher 56 gespeichert ist, und die zweite Seriennummer, die im zweiten nicht-flüchtigen permanenten Speicher 57 gespeichert ist, erkennen, sodass der zweite Teilnehmer 12 die Daten im Telegramm verarbeitet.

Der Koordinator 13 umfasst eine integrierte Schaltung 45, die als ASIC realisiert sein kann. Die integrierte Schaltung 45 kann die Spannungsversorgung 28, den Transceiver 24, die Signalleitungsschaltung 31, den flüchtigen Speicher 52 und den Prozessorkern 20 umfassen. Weiter umfasst der erste und der zweite Teilnehmer 11, 12 jeweils eine integrierte Schaltung 46, 47, die als ASIC realisiert sein kann. Die integrierte Schaltung 46 des ersten Teilnehmers 11 kann die Spannungsversorgung 29, den Transceiver 25, die Signalleitungsschaltung 32, den ersten flüchtigen Speicher 54, den ersten nicht-flüchtigen permanenten Speicher 55, den ersten nicht-flüchtigen semi-permanenten Speicher 55' und den Prozessorkern 15 umfassen. Entsprechend kann die integrierte Schaltung 47 des zweiten Teilnehmers 12 die Spannungsversorgung 30, den Transceiver 26, die Signalleitungsschaltung 33, den zweiten flüchtigen Speicher 56, den zweiten nicht-flüchtigen permanenten Speicher 57, den zweiten nicht-flüchtigen semi-permanenten Speicher 57' und den Prozessorkern 16 aufweisen.

Der Koordinator 13 umfasst einen weiteren Transceiver 58, der einen weiteren Busanschluss 59 des Koordinators 13 mit dem Mikrocontroller 34 koppelt. Der Koordinator 13 umfasst einen Schalter 49. Der Schalter 49 kann als Taster ausgebildet sein. Der Schalter 49 kann von einem Bediener betätigt werden. Weiter umfasst die Busanordnung 10 einen Feldbus 60, der an den weiteren Busanschluss 59 angeschlossen ist. Der Koordinator 13 kann ein Gateway, Router oder Switch sein. Der Koordinator 13 weist einen Oszillator 50 auf. Der Oszillator 50 kann als RC Oszillator ausgeführt sein. Der Oszillator 50 kann zur Zeitsteuerung eingesetzt werden. Der Koordinator 13 kann einen nicht-flüchtigen permanenten Speicher 51 oder einen weiteren Speicher, der als RAM oder Flash-Speicher realisiert ist, aufweisen. Eine Steuerung 61 der Busanordnung 10 kann beispielsweise an den Feldbus 60 angeschlossen sein.

Der Bus 14 ist als Flachbandkabel oder Rundkabel realisiert. Gemäß Figur 1 kann der Bus 14 z.B. aus fünf Adern bestehen. Alternativ kann der Bus 14 eine andere Anzahl von Adern, z.B. acht Adern, aufweisen. Die Funktionsweise der Busanordnung 10 gemäß Figur 1 wird anhand der folgenden Figuren näher erläutert.

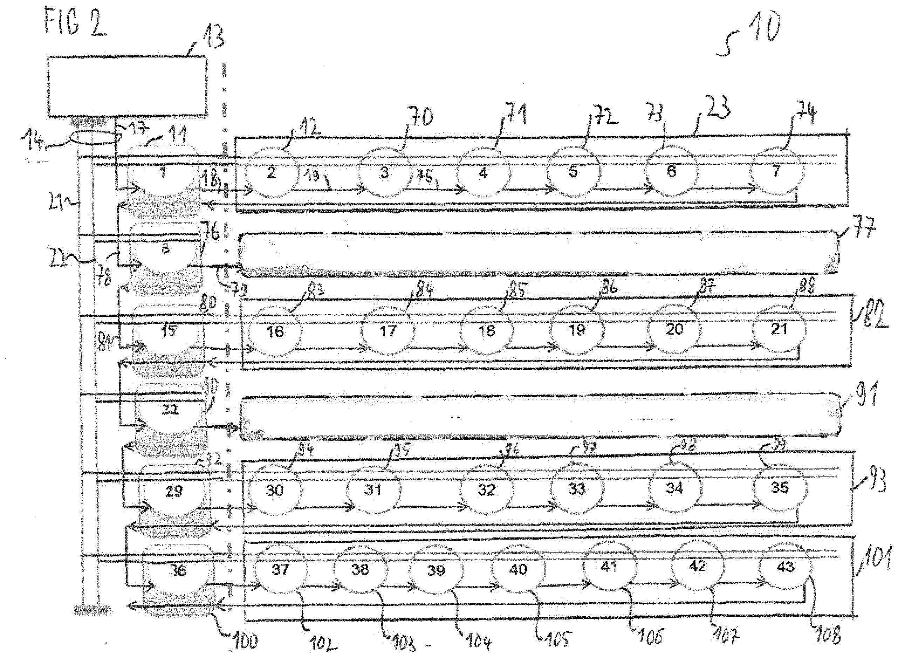

Figur 2 zeigt eine beispielhafte Ausführungsform einer Busanordnung 10, die eine Weiterbildung der in Figur 1 gezeigten Busanordnung ist. Die Busanordnung 10 umfasst den Koordinator 13, den ersten Teilnehmer 11 sowie die erste Teilnehmeranordnung 23. Die erste Teilnehmeranordnung 23 umfasst den zweiten Teilnehmer 12 sowie einen dritten bis zu einem siebten Teilnehmer 70 bis 74. In Figur 2 ist im jeweiligen Teilnehmer die Teilnehmeradresse angegeben. Da der erste Teilnehmer 11 unmittelbar und direkt an den Koordinator 13 angeschlossen ist, trägt der erste Teilnehmer 11 die erste Teilnehmeradresse "1". Entsprechend tragen der zweite bis zum siebten Teilnehmer 12, 70 - 74 die Teilnehmeradressen "2" bis "7". Der Koordinator 13 nummeriert die Teilnehmer 11, 12, 70-74 durch.

Die mindestens eine Busleitung 21 und die weitere Busleitung 22 sind an alle Teilnehmer 11, 12, 70 - 74 angeschlossen. Jeder der Teilnehmer 11, 12, 70 - 74 ist eingangsseitig über eine Signalleitung an den vorangehenden Teilnehmer und ausgangsseitig über eine Signalleitung an den nachfolgenden Teilnehmer angeschlossen. So ist etwa der dritte Teilnehmer 70 über die dritte Signalleitung 19 eingangsseitig an den zweiten Teilnehmer 12 und über eine vierte Signalleitung 75 an den vierten Teilnehmer 71 angeschlossen.

Darüber hinaus umfasst die Busanordnung 10 einen achten Teilnehmer 76. Der achte Teilnehmer 76 ist wie der erste Teilnehmer 11 ausgebildet. Die Busanordnung 10 ist ausgelegt, eine weitere Teilnehmeranordnung 77 aufzunehmen, die an den achten Teilnehmer 76 angeschlossen werden kann. Die weitere Teilnehmeranordnung 77 ist gestrichelt gezeichnet. Die an den achten Teilnehmer 76 anschließbare weitere Teilnehmeranordnung 77 könnte beispielsweise einen neunten bis einen vierzehnten Teilnehmer aufweisen. Der achte Teilnehmer 76 ist eingangsseitig über eine Signalleitung 78 an den Ausgang des siebten Teilnehmers 74 angeschlossen. Im in Figur 2 gezeigten Zustand der Busanordnung 10 ist ausgangsseitig der achte Teilnehmer 76 über eine Signalleitung 79 an keinen weiteren Teilnehmer angeschlossen. Ausgangsseitig könnte an den achten Teilnehmer 76 über eine Signalleitung 79 jedoch ein neunter Teilnehmer angeschlossen werden.

Darüber hinaus umfasst die Busanordnung 10 einen fünfzehnten Teilnehmer 80, dessen Eingang über eine weitere Signalleitung 81 an den vierzehnten Teilnehmer angeschlossen werden könnte. Da die weitere Teilnehmeranordnung 77 umfassend den neunten bis zum vierzehnten Teilnehmer jedoch fehlt, entsteht zwischen dem achten Teilnehmer 76 und dem fünfzehnten Teilnehmer 80 eine Lücke, auch Daisy-Chain-Lücke oder Signalleitungs-Unterbrechung, englisch selection disruption, genannt. An den fünfzehnten Teilnehmer 80 ist eine zusätzliche Teilnehmeranordnung 82 angeschlossen. Die zusätzliche Teilnehmeranordnung 82 umfasst einen sechzehnten bis einen einundzwanzigsten Teilnehmer 83 bis 88. Der sechzehnte bis zum einundzwanzigsten Teilnehmer 83 bis 88 sind jeweils eingangsseitig über eine Signalleitung an den vorangehenden Teilnehmer und ausgangsseitig über eine Signalleitung an den nachfolgenden Teilnehmer angeschlossen.

Ferner umfasst die Busanordnung 10 einen zweiundzwanzigsten Teilnehmer 90, an den eine zusätzliche Teilnehmeranordnung 91, welche einen dreiundzwanzigsten bis zu einem achtundzwanzigsten Teilnehmer umfasst, angeschlossen werden kann. Die zusätzliche Teilnehmeranordnung 91 fehlt in dem beispielhaften Zustand der Busanordnung 10, welcher in Figur 2 gezeigt ist.

Darüber hinaus zeigt die Busanordnung 10 einen neunundzwanzigsten Teilnehmer 92 sowie eine weitere zusätzliche Teilnehmeranordnung 93, die einen dreißigsten bis zu einem fünfunddreißigsten Teilnehmer aufweist 94 bis 99, einen sechsunddreißigsten Teilnehmer 100 sowie eine weitere zusätzliche Teilnehmeranordnung 101, die einen siebenunddreißigsten bis zu einem dreiundvierzigsten Teilnehmer 102 bis 108 aufweist.

Alle Teilnehmer der Busanordnung 10 sind direkt an die mindestens eine Busleitung 21 und die weitere Busleitung 22 angeschlossen. Jeder dieser Teilnehmer kann somit über seine Teilnehmeradresse angesprochen werden, sobald der Koordinator 13 in der Konfigurationsphase K dem Teilnehmer seine Teilnehmeradresse zugewiesen hat. Weiter ist jeder der Teilnehmer eingangsseitig über eine Signalleitung an seinen vorangehenden Teilnehmer angeschlossen, sofern dieser nicht fehlt, sowie ausgangsseitig über eine Signalleitung an den nachfolgenden Teilnehmer angeschlossen, sofern dieser nicht fehlt.

Der erste, achte, fünfzehnte, zweiundzwanzigste, neunundzwanzigste und sechsunddreißigste Teilnehmer 11, 76, 80, 90, 92, 100 können in einer Betriebsphase B nicht vom Bus 14 abgekoppelt werden. Diese Teilnehmer sind die sogenannten fest montierten Teilnehmer, englisch fix mounted. Hingegen können die erste Teilnehmeranordnung 23 sowie die weiteren Teilnehmeranordnungen 77, 82, 91, 93, 101 in einer Betriebsphase B vom Bus 14 abgekoppelt werden. Die Teilnehmeranordnungen 23, 77, 82, 91, 93, 101 sind entfernbar, englisch removeable, und im Betrieb austauschbar, also hot-plug fähig realisiert. Die Teilnehmeranordnungen 23, 77, 82, 91, 93, 101 können auch als Schublade, englisch Drawer bezeichnet werden.

In einer alternativen, nicht gezeigten Ausführungsform weist die erste Teilnehmeranordnung 23 oder eine der weiteren Teilnehmeranordnungen 77, 82, 91, 93, 101 eine andere Anzahl von Teilnehmer auf, als in Figur 2 dargestellt. Die erste oder eine der weiteren Teilnehmeranordnungen 23, 77, 82, 91, 93, 101 kann beispielsweise mindestens einen Teilnehmer, also etwa den zweiten Teilnehmer 12, aufweisen. Alternativ kann die erste oder eine der weiteren Teilnehmeranordnungen 23, 77, 82, 91, 93, 101 mindestens zwei Teilnehmer 12, 70 aufweisen.

Durch das Adressierungsverfahren mittels der eindeutigen ASIC-Seriennummer, die jedem Teilnehmer 11, 12 und damit jeder Teilnehmer-Adresse zugeordnet ist, können Lücken in der Daisy Chain überbrückt werden, wenn zuvor die Konfiguration einmalig in der Konfigurationsphase K remanent unveränderbar eingelesen wurde. Zum Starten der Konfigurationsphase K kann der Schalter 49, auch Konfigurations-Taster genannt, betätigt werden. Teilnehmer hinter einer Select-Signal-Lücke werden auch wieder angekoppelt.

Die Busanordnung 10 ermöglicht ein Hot Plug Verfahren: Bei einer Wartung können neue Teilnehmer mit neuer Seriennummer zum Einsatz kommen und diese können in einer Austauschbetriebsphase über die Daisy Chain aufgenommen werden.

Die Busanordnung 10 ist auch dann sicher, wenn mehrere Teilnehmer vertauscht werden und zusätzlich eine Unterbrechung der Daisy Chain vor den vertauschten Elementen erzeugt wird. In diesem Fall erzeugt der Koordinator 12 eine Fehlermeldung und/oder setzt die Busanordnung 10 in einen sicheren Zustand.

Eine Austauschbetriebsphase, auch Replacement-Mode genannt, sieht die Identifizierung der Schubladen 23, 77, 82, 91, 93, 101 und ihrer Teilnehmer, die On-und Off-Line austauschbar sind, vor. Da die Schubladen 23, 77, 82, 91, 93, 101 mit ihren Teilnehmern und ihre Position in der Busanordnung 10, das heißt im Schrank, eindeutig ermittelt werden können, ist eine gute Handhabbarkeit bei hoher Sicherheit gegeben. Damit der Schubladeanfang jeweils am Bus 14 eindeutig bestimmet werden kann, werden in den Stromversorgungs-Abzweigkomponenten ein Teilnehmertyp, z.B. der erste Teilnehmer 11, eingebaut, der diese Abzweig-Position im Busstrang signalisiert. Der erste Teilnehmer 11 bleibt fest im Schrank installiert und kann nur Offline und mittels einer weiteren Konfigurationsphase K' ausgetauscht werden.

Der erste Teilnehmer 11 kann auch in der Austauschbetriebsphase über die ASIC-Seriennummer adressiert werden und damit auch bei einer davor gezogenen Schublade (Daisy Chain Unterbrechung) adressiert werden. Zwischen diesen fest installierten Teilnehmern 11, 76, 80, 90, 92, 100 kann die reine Daisy Chain Adressierung für die Hot-Plug fähigen Teilnehmer der Teilnehmeranordnungen 23, 77, 82, 91, 93, 101 separat gestartet werden.

Zusätzlich kann die integrierte Schaltung 46 im ersten Teilnehmer 11 den abgehenden Strom der 15 Volt Busversorgung 27, 42 messen und damit detektieren, ob überhaupt die zu versorgende erste Teilnehmeranordnung 23, also die Schublade, mechanisch gesteckt ist und sich ein Wiederankopplungs-Versuch der ersten Teilnehmeranordnung 23 überhaupt lohnt. Die integrierte Schaltung 45 misst den auf der Versorgungsleitung 27 zur ersten Teilnehmeranordnung 23 fließenden Strom. Fließt ein Strom, so versucht der Koordinator 13, die erste Teilnehmeranordnung 23 wieder zu aktivieren. Somit kann eine Optimierung der Wiederankopplung durchgeführt werden.

Zusätzlich kann ein Offline Austausch durchgeführt werden. Die Schubladen 23, 77, 82, 91, 93, 101 können auch im ausgeschalteten Zustand ersetzbar sein, also nicht nur Online Hot-Plug fähig sein. Die Busanordnung 10 ist geeignet, dass der Gateway 13 woanders (anderer Schrank) mit kompatiblen Aufbau eingebaut wird und anläuft und die neuen Teilnehmer erkennt.

Nach Power On wird in der Sollkonfiguration der Austausch-Mode erkannt. Die fest installierten Teilnehmer 11, 76, 80, 90, 92, 100 werden als erstes direkt auf die Seriennummer geprüft. Sind alle diese speziellen Teilnehmer 11, 76, 80, 90, 92, 100 in der Sollkonfiguration vorhanden (Schrank-Erkennung), kann die Wiederankopplung oder der kompatible Austausch der Teilnehmer, wie im Online-Austausch auch, für jeweils eine Teilnehmeranordnung 23, auch Segment oder Schublade genannt, mittels Selektierung über die Daisy Chain gestartet werden. Es wird dann mittels des nächsten ersten Schubladen-Teilnehmers 11, 76, 80, 90, 92, 100 die nächste Schublade 23, 77, 82, 91, 93, 101 behandelt.

Auch ein Anlauf mit fehlender erster Schublade 23 ist möglich. Wenn der erste Teilnehmer 11 am Bus 14 nicht erkannt werden kann, geht der Koordinator 13 üblicherweise in einen Fehlerzustand ohne Busaktivität, der nur über ein Zurücksetzen, englisch Reset, verlassen werden kann. Wenn der Online-Austausch konfiguriert wurde, wird dieser endgültige Fehler-Zustand nicht mehr eingenommen, sondern immer das Wiedergewinnverfahren, englisch Regain-Automat, gestartet. Der Koordinator 13 fängt also mit den fest installierten ersten Teilnehmern 11, 76, 80, 90, 92, 100 mit Seriennummer-Adressierung an und versucht dann in aufsteigender Reihenfolge die Teilnehmer 12, 70-74 etc. der einzelnen Schubladen 23, 77, 82, 91, 93, 101 über die Signalleitungen zu adressieren, bis er am nächsten Schubladenabzweig neu beginnt.

Die Busanordnung 10 kann eine logische Rückwärtsadressierung mittels festem Bezugspunkt, Seriennummer und Daisy Chain Kontrolle durchführen.

Bei einem Hot Plug fähigem Bussystem 10, in dem Teilnehmer ersetzt werden können, kann die Seriennummer für die einfache Überbrückung einer Daisy Chain-Lücke nicht mehr genutzt werden. Teilnehmer hinter der Lücke können nicht mehr einfach adressiert werden, ohne dass eine Verwechslung und damit eine Gefährdung ausgeschlossen werden kann. Daher wird in der Busanordnung 10 bei einer Lücke der nächste geografische fest installierte Teilnehmer, also etwa die Teilnehmer 11, 76, 80, 90, 92, 100, als Startpunkt für eine logische Rückwärtsadressierung genutzt und versucht, die Teilnehmer vor dem geografischen Startpunkt erst mittels Seriennummer zu adressieren, mittels Signalleitungen ihre Position zu prüfen, und dann erst zu aktivieren. Der erste Teilnehmer 11 und die Teilnehmer 76, 80, 90, 92, 100 sind nicht Hot Plug fähig.

Zwischen zwei fest installierten nicht Hot Plug-fähigen Teilnehmern 11, 76 kann die Adressierung der Teilnehmer 12, 70-74 der ersten Teilnehmeranordnung 23 auch mittels Seriennummer versucht werden, aber es muss zusätzlich mittels der Signalleitungen die geografische Position geprüft werden, bevor die Teilnehmer 12, 70-74 der ersten Teilnehmeranordnung 23 aktiviert werden dürfen. Hierbei kann die Adressierung auch von einem Startpunkt aus rückwärts erfolgen, d.h. es wird versucht, die davor liegende Seriennummer zu adressieren und deren Signalleitung zu setzen, um dann im dahinter liegenden Teilnehmer (Fix beim ersten Durchlauf) mittels Signalleitung auch dessen wirkliche geografische Position zu prüfen. Dies kann von Teilnehmer zu Teilnehmer rückwärts bis zu einer Signalleitungslücke erfolgen.

Der Koordinator 13 kennt die fest, nicht austauschbaren, installierten Teilnehmer 11, 76, 80, 90, 92, 100 und kann von diesen aus nicht nur die Signalleitungs-Adressierung neu anfangen, sondern auch versuchen, von ihnen aus geografisch rückwärts mittels Seriennummer zu adressieren und vor der Aktivierung die geografische Position zusätzlich zu kontrollieren. Damit ist die rückwärts laufende Seriennummer-Adressierung mittels der Daisy Chain überprüfbar.

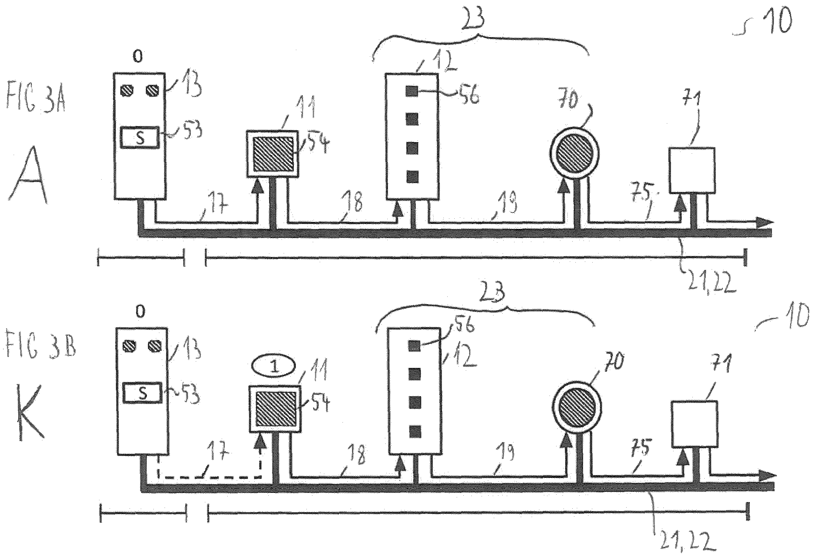

Figuren 3A bis 3H zeigen eine beispielhafte Ausführungsform einer Busanordnung 10, die eine Weiterbildung der in Figuren 1 und 2 gezeigten Ausführungsformen ist. Die Busanordnung 10 umfasst den Koordinator 13, den ersten und den zweiten Teilnehmer 11, 12 sowie einen dritten und einen vierten Teilnehmer 70, 71. Die erste Teilnehmeranordnung 23 umfasst den zweiten und den dritten Teilnehmer 12, 70. Im Unterschied zu Figur 2 ist der vierte Teilnehmer 71 wie der erste Teilnehmer 11 realisiert und im laufenden Betrieb nicht entfernbar. Der Koordinator 13 ist über die erste Signalleitung 17 direkt an den ersten Teilnehmer 11 angeschlossen. Der erste Teilnehmer 11 ist über die zweite Signalleitung 18 direkt an den zweiten Teilnehmer 12 angeschlossen. Entsprechend ist der zweite Teilnehmer 12 über die dritte Signalleitung 19 direkt an den dritten Teilnehmer 70 angeschlossen. Weiter ist der dritte Teilnehmer 70 über die vierte Signalleitung 75 an den vierten Teilnehmer 71 angeschlossen. Die erste bis zur vierten Signalleitung 17, 18, 19, 75 bilden eine Daisy-Chain. Darüber hinaus ist der Koordinator 13 direkt an alle Teilnehmer 11, 12, 70, 71 über die mindestens eine Busleitung 21 und die weitere Busleitung 22, welche auch als erste und zweite Busleitung bezeichnet werden, angeschlossen.

In Figur 3A ist die Busanordnung 10 in einer Ausschaltphase A dargestellt. Die Ausschaltphase A kann beispielsweise vor einer Betriebsphase B sein, die mit einer Konfigurationsphase K beginnt. Alternativ kann die Ausschaltphase A vor einer weiteren Betriebsphase B' sein, die mit einer Wiederanlaufphase W beginnt. Der Koordinator 13 weist eine Adresse z.B. 0 auf. Im ersten bis zum vierten Teilnehmer 11, 12, 70, 71 sind keine Teilnehmeradressen gespeichert. In den Figuren 3B bis 3E werden die Teilnehmer 11, 12, 70, 71 von links nach rechts über den Koordinator 13 und mit Hilfe der Daisy-Chain sukzessive adressiert und die geographischen Positionen und damit die Reihenfolge der Teilnehmer 11, 12, 70, 71 festgelegt.

In einer alternativen, nicht gezeigten Ausführungsform ist der Koordinator 13 über die erste Signalleitung 17 und einen oder mehrere weitere Teilnehmer sowie eine oder mehrere weitere Signalleitungen mit dem ersten Teilnehmer 11 gekoppelt.

Figur 3B zeigt die Busanordnung 10 gemäß Figur 3A in der Konfigurationsphase K. Der Koordinator 13 aktiviert über die erste Signalleitung 17 den ersten Teilnehmer 11. Um die Aktivierung anzudeuten, ist die erste Signalleitung 17 gestrichelt gezeichnet. Nach der Aktivierung sendet der Koordinator 13 über die erste und die zweite Busleitung 21, 22 ein Telegramm, das eine erste Teilnehmeradresse enthält, an alle Teilnehmer 11, 12, 70, 71. Ausschließlich der aktivierte Teilnehmer, nämlich der erste Teilnehmer 11, übernimmt die im Telegramm enthaltene erste Teilnehmeradresse in seinen flüchtigen Speicher 54. Die erste Teilnehmeradresse kann 1 sein.

Wie erläutert, setzt der Koordinator 13 seine Daisy-Chain und sendet die zu vergebene Teilnehmeradresse 1 als Broadcast über die RS 485 Busleitung/Datenleitung 21, 22 des Busses 14 an alle Teilnehmer 11, 12, 70, 71. Zu diesem Zeitpunkt ist ausschließlich die Daisy-Chain beim ersten Teilnehmer 11 aktiv, so dass dieser die vom Koordinator 13 erhaltene Teilnehmeradresse mit der Nummer 1 als die seine interpretiert. Ab diesem Zeitpunkt kann der erste Teilnehmer 11 Nachrichten mit der zuvor erhaltenen Teilnehmeradresse empfangen.

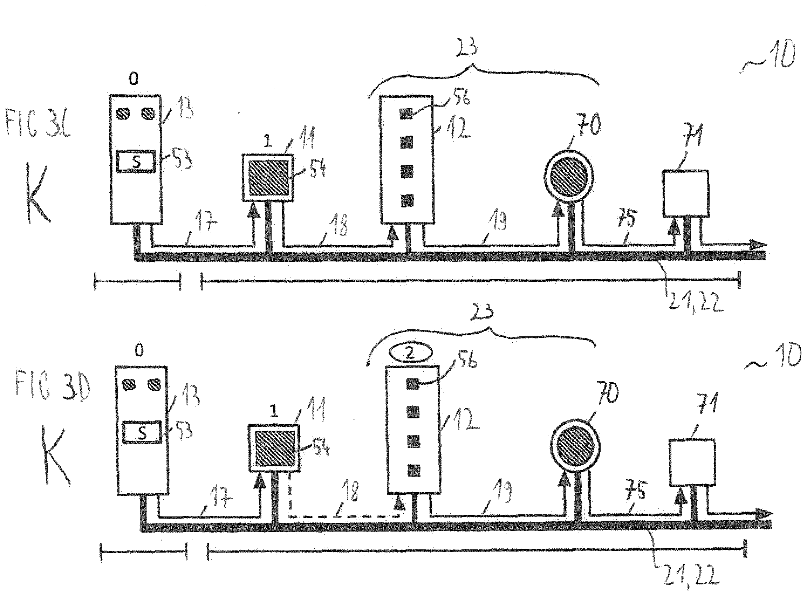

Figur 3C zeigt die bereits in Figuren 3A und 3B gezeigte Busanordnung 10 in einem weiteren Schritt der Konfigurationsphase K. Der Koordinator 13 nimmt eine Verbindung zum ersten Teilnehmer 1 über die erste und die zweite Busleitung 21, 22 auf, um eine erste Seriennummer des ersten Teilnehmers 11 auszulesen. Dazu sendet der Koordinator 13 ein Telegramm an die erste Teilnehmeradresse, die den Befehl, die Seriennummer bereitzustellen, umfasst. Der Transceiver 25 des ersten Teilnehmers 11 erkennt, dass der erste Teilnehmer 11 angesprochen ist und bewirkt, dass der Prozessorkern 15 des ersten Teilnehmers 11 über die erste und die zweite Busleitung 21, 22 die erste Seriennummer an den Koordinator 13 sendet, der sie im nicht-flüchtigen semi-permanenten Speicher 53 speichert. Dadurch ist der erste Teilnehmer 11 im Koordinator 13 registriert.

In Figur 3C ist der Koordinator 13 in der Lage, eine Verbindung zum ersten Teilnehmer 11 aufzunehmen und seine Daten abzufragen. Unter anderem wird die erste Seriennummer ausgelesen und im Koordinator 13 mit der dazugehörigen ersten Teilnehmeradresse verknüpft und remanent gespeichert. Die Daisy-Chain wird zurückgesetzt.

Figur 3D zeigt die Busanordnung 10, die bereits in den Figuren 3A bis 3C gezeigt ist, in einem weiteren Schritt in der Konfigurationsphase K. Der Koordinator 13 sendet ein Telegramm an den ersten Teilnehmer 11 mit dem Befehl, die ausgangsseitige Signalleitung, also die zweite Signalleitung 18, zu aktivieren. Der erste Teilnehmer 11 erkennt mittels seines Transceivers 25, dass er angesprochen ist und aktiviert über ein Signal auf der zweiten Signalleitung 18 den zweiten Teilnehmer 12. Anschließend sendet der Koordinator 13 ein Telegramm an alle Teilnehmer 11, 12, 70, 71, das die zweite Teilnehmeradresse, z.B. 2, enthält. Da jedoch ausschließlich der zweite Teilnehmer 12 aktiviert ist, übernimmt ausschließlich der zweite Teilnehmer 12 die zweite Teilnehmeradresse in seinen flüchtigen Speicher 56. Als weiteren Schritt in der Konfigurationsphase K veranlasst der Koordinator 13 den zweiten Teilnehmer 12, die zweite Seriennummer bereitzustellen. Der zweite Teilnehmer 12 wird durch die Abspeicherung der zweiten Seriennummer im nicht-flüchtigen semi-permanenten Speicher 53 des Koordinators 13 registriert.

In Figur 3D erhält der erste Teilnehmer 11 den Auftrag, seine Daisy-Chain zu setzen, so dass die Adressierung fortgeführt werden kann. Der Koordinator 13 sendet eine Broadcast mit der enthaltenen Teilnehmeradresse 2. Dieses Prozedere führt der Koordinator 13 durch, bis alle Teilnehmer eine Teilnehmeradresse zugewiesen bekommen haben. Folglich wird der dritte Teilnehmer 70 aktiviert und ihm eine dritte Teilnehmeradresse, etwa 3, zugewiesen sowie eine dritte Seriennummer des dritten Teilnehmers 70 abgefragt. Der vierte Teilnehmer 71 führt entsprechende Schritte durch.

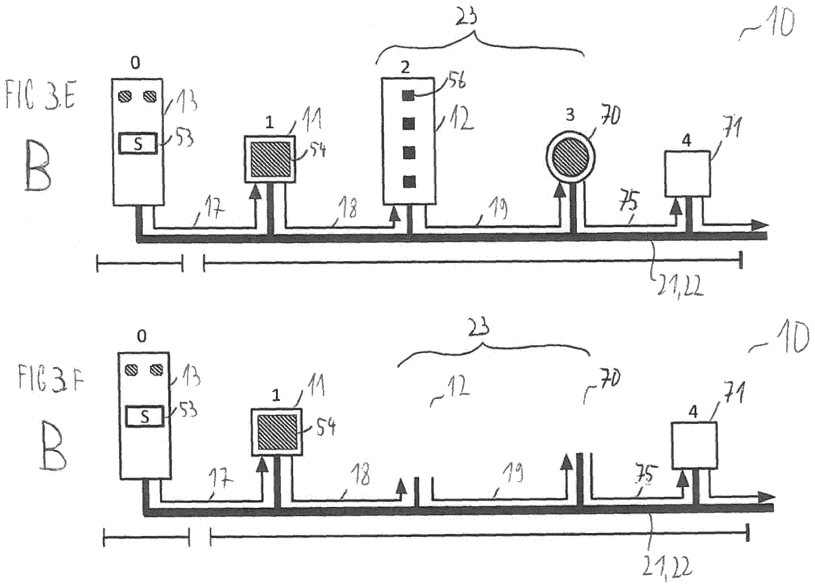

Figur 3E zeigt die Busanordnung 10, die bereits in Figuren 3A bis 3D gezeigt ist, in der Betriebsphase nach Abschluss der Konfigurationsphase K. Der Koordinator 13 ist nunmehr in der Lage, alle Teilnehmer 11, 12, 70, 71 über die Teilnehmeradressen zu adressieren.

Die adressierten Teilnehmer 11, 12, 70, 71 werden inklusive Parameter- und Konfigurationsdaten (Seriennummern, Hersteller-Identität) remanent im Koordinator 13 gespeichert. Über die eindeutige Seriennummer lassen sich zuvor ermittelte Teilnehmer 11, 12, 70, 71, auch nach Ausfällen, durch den Koordinator 13 wieder ansprechen. Die adressierten Teilnehmer 11, 12, 70, 71 speichern sich ihre Teilnehmeradressen nicht remanent ab und verhalten sich nach erneutem Power-Up wieder wie zu Beginn, etwa wie in Figur 3A.

Figur 3F zeigt die Busanordnung 10, wie sie bereits in den Figuren 3A bis 3E erläutert ist, in der Betriebsphase B. In der Betriebsphase B können Teilnehmer ausfallen. In dem in Figur 3F gezeigten Beispiel sind der zweite und der dritte Teilnehmer 12, 70 ausgefallen. Der Koordinator 13 ist weiter in der Lage, Telegramme an die nicht ausgefallenen Teilnehmer 11, 71 über die erste und die zweite Busleitung 21, 22 zu senden und die nicht ausgefallenen Teilnehmer 11, 71 zu steuern oder ihre Daten abzufragen. Der Koordinator 13 erkennt den Ausfall der Teilnehmer, in diesem Fall des zweiten und des dritten Teilnehmers 12, 70, und speichert im nicht-flüchtigen semi-permanenten Speicher 53 eine Information über den Ausfall der ausgefallenen Teilnehmer 12, 70, das heißt registriert diese als ausgefallen.

Auch nach Ausfall von Teilnehmern 12, 70 läuft die Busanordnung 10 weiter. Der Koordinator 13 übernimmt die Rolle der ausgefallenen Teilnehmer 12, 70. Der flüchtige Speicher 54, 56 des oder der ausgefallenen Teilnehmer 12, 70 verliert während des Ausfalls in der Regel die Teilnehmeradresse.

Der Koordinator 13 ist derart konfiguriert, dass er einen oder mehrere ausgefallene Teilnehmer wieder aktiviert, beispielsweise azyklisch oder zu vorgegebenen Zeitpunkten. Ein ausgefallener Teilnehmer kann beispielsweise in einer Ausschaltphase A repariert werden. In einer Ausführungsform kann der ausgefallene Teilnehmer auch in einer Betriebsphase B entnommen und nach Reparatur wieder eingesetzt werden. Dieses Verfahren wird als Hot-Plug bezeichnet.

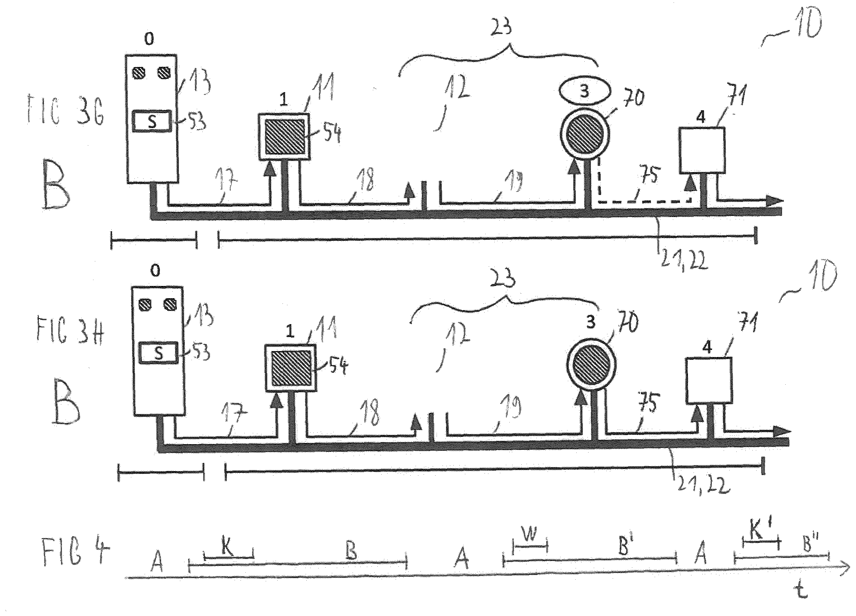

Figur 3G zeigt die beispielhafte Busanordnung 10, wie sie bereits in den Figuren 3A bis 3F gezeigt ist, in einem Teil der Betriebsphase B. Wie in Figur 3F gezeigt, sind zwei Teilnehmer, nämlich der zweite und der dritte Teilnehmer 12, 70, ausgefallen. Ausschließlich der dritte Teilnehmer 70 ist wieder vorhanden und soll wieder angekoppelt werden. Zur Aktivierung sendet der Koordinator 13 ein Telegramm über die erste und die zweite Busleitung 21, 22 mit der Seriennummer des ausgefallenen Teilnehmers, also mit der Seriennummer des dritten Teilnehmers 70. Beispielsweise kann der dritte Teilnehmer 70 den Erhalt des Telegramms gegenüber dem Koordinator 13 bestätigen. Der Koordinator 70 sendet ein Telegramm an den ausgefallenen Teilnehmer 70 mit dem Befehl, dass dieser ein Signal an seiner ausgangsseitigen Signalleitung an den nachfolgenden Teilnehmer 71 abgibt.

Im Beispiel der Figur 3G sendet der dritte Teilnehmer 70 über die vierte Signalleitung 75 ein Signal an den vierten Teilnehmer 71. Der Teilnehmer 71, der sich nach dem ausgefallenen Teilnehmer 70 am Bus 14 befindet, übermittelt dem Koordinator 13 seine Aktivierung. Der Koordinator 13 übermittelt die dritte Teilnehmeradresse an den dritten Teilnehmer 70, etwa mittels eines Telegramms, das an die dritte Seriennummer adressiert ist. Somit ist sichergestellt, dass derjenige Teilnehmer, der die dritte Seriennummer aufweist, nicht an einem irgendeinem Platz am Bus 14 bei seiner Wiederanschaltung befestigt ist, sondern an der korrekten Stelle, nämlich unmittelbar vor dem vierten Teilnehmer 71.

Der vierte Teilnehmer 71 ist ein fest installierter Teilnehmer. Da dessen Position am Bus eindeutig ist, ist durch die Verwendung der dritten Seriennummer sichergestellt, dass auf der Position des dritten Teilnehmers 70 der richtige Teilnehmer installiert ist.

Wie oben beschrieben, lassen sich über die eindeutige Seriennummer wiederkehrende Teilnehmer 70 vom Koordinator 13 auch ohne Daisy-Chain ansprechen. Für die Ermittlung der geographischen Positionen wird dann allerdings die Daisy-Chain des erfassten Teilnehmers 70 zur Hilfe genommen. So kann nach Aktivierung der Daisy-Chain vom dritten Teilnehmer 70 zum vierten Teilnehmer 71 die geographische Lage des dritten Teilnehmers 70 wieder bestätigt werden.

Figur 3H zeigt die Busanordnung 10, die bereits in den Figuren 3A bis 3G gezeigt ist, nach Durchführung der anhand der Figur 3G erläuterten Schritte. Der dritte Teilnehmer 70 hat nun seine Teilnehmeradresse 3 zurückerhalten und kann in die Busanordnung 10 wieder aufgenommen werden. Der Koordinator 13 speichert in seinem nicht-flüchtigen semi-permanenten Speicher 53, dass der dritte Teilnehmer 70 aktiv ist.

Figur 4 zeigt eine beispielhafte Ausführungsform des zeitlichen Verlaufs der Phasen. Die verschiedenen Phasen sind über einer Zeit t aufgetragen. Die Konfigurationsphase K wird zu Beginn der Betriebsphase B durchgeführt. Nach Durchführung der Koordinationsphase wird in der Betriebsphase B beispielsweise ein regulärer Betrieb der Busanordnung 10 durchgeführt. Nach der Betriebsphase B erfolgt eine Ausschaltphase A. In der Ausschaltphase A sind der Koordinator 13 und die Teilnehmer 11, 12 nicht mit elektrischer Energie versorgt. Auf die Ausschaltphase A folgt eine weitere Betriebsphase B'. Zu Beginn der weiteren Betriebsphase B' wird eine Wiederanlaufphase W durchgeführt. Nach der Wiederanlaufphase W wird in der weiteren Betriebsphase B' der reguläre Betrieb der Busanordnung 10 realisiert. Auf die weitere Betriebsphase B' können weitere Ausschaltphasen A und weitere Betriebsphasen B" folgen.

Eine der weiteren Betriebsphasen B" kann beispielsweise mit einer weiteren Konfigurationsphase K' beginnen. Ein Bediener kann beispielsweise mittels des Schalters 49 des Koordinators 13 die Busanordnung 10 zurücksetzen, sodass die Busanordnung 10 mit der weiteren Konfigurationsphase K' startet.

Der in Figuren 3F bis 3G geschilderte Ausfall von Teilnehmern und die Aktivierung von Teilnehmern kann in jeder der Betriebsphasen B, B', B" erfolgen.

In der Wiederanlaufphase W führt der Koordinator 13 ähnliche Schritte durch, um die Teilnehmeradressen den Teilnehmern zuzuordnen wie in der Konfigurationsphase K. Zusätzlich führt der Koordinator 13 einen Vergleich der in der Wiederanlaufphase W abgefragten Seriennummern mit den in seinem nicht-flüchtigen semi-permanenten Speicher 53 gespeicherten Seriennummern durch.

### Bezugszeichenliste

- 10: Busanordnung
- 11: erster Teilnehmer
- 12: zweiter Teilnehmer
- 13: Koordinator
- 14: Bus
- 15, 16: Prozessorkern
- 17: erste Signalleitung
- 18: zweite Signalleitung
- 19: dritte Signalleitung
- 20: Prozessorkern
- 21: mindestens eine Busleitung
- 22: weitere Busleitung
- 23: erste Teilnehmeranordnung
- 24, 25, 26: Transceiver
- 27: Versorgungsleitung
- 28, 29, 30: Spannungsversorgung
- 31, 32, 33: Signalleitungsschaltung
- 34: Mikrocontroller
- 35, 36: Applikationseinrichtung
- 42: Bezugspotentialleitung
- 45, 46, 47: integrierte Schaltung
- 49: Schalter
- 50: Oszillator
- 51: nicht-flüchtiger permanenter Speicher
- 52: flüchtiger Speicher
- 53: nicht-flüchtiger semi-permanenter Speicher
- 54: erster flüchtiger Speicher
- 55: erster nicht-flüchtiger permanenter Speicher
- 55': erster nicht-flüchtiger semi-permanenter Speicher
- 56: zweiter flüchtiger Speicher
- 57: zweiter nicht-flüchtiger permanenter Speicher
- 57': zweiter nicht-flüchtiger semi-permanenter Speicher
- 58: weiterer Transceiver
- 59: weiterer Busanschluss
- 60: Feldbus
- 70-74: Teilnehmer
- 75: Signalleitung
- 76: Teilnehmer
- 77: weitere Teilnehmeranordnung
- 78, 79: Signalleitung
- 80, 83-88: Teilnehmer
- 81: Signalleitung
- 82: zusätzliche Teilnehmeranordnung
- 90: Teilnehmer
- 91: Teilnehmeranordnung
- 92,94-99: Teilnehmer
- 93: weitere zusätzliche Teilnehmeranordnung
- 100, 102-108: Teilnehmer
- 101: weitere zusätzliche Teilnehmeranordnung
- A: Ausschaltphase
- B, B', B": Betriebsphase
- K: Konfigurationsphase
- K': weitere Konfigurationsphase
- t: Zeit
- W, W': Wiederanlaufphase

## Patentansprüche

1. Busanordnung, umfassend
- einen Koordinator (13),
- einen ersten Teilnehmer (11),
- eine erste Teilnehmeranordnung (23) mit einem zweiten Teilnehmer (12) und
- einen Bus (14), der den Koordinator (13) mit dem ersten und dem zweiten Teilnehmer (11, 12) koppelt, wobei der erste Teilnehmer (11) zwischen dem Koordinator (13) und dem zweiten Teilnehmer (12) am Bus (14) angeordnet ist,
wobei der Bus (14) eine erste Signalleitung (17), die den ersten Teilnehmer (11) und den Koordinator (13) koppelt, eine zweite Signalleitung (18), die den zweiten Teilnehmer (12) an den ersten Teilnehmer (11) anschließt, und mindestens eine Busleitung (21) umfasst, die den Koordinator (13) mit dem ersten und dem zweiten Teilnehmer (11, 12) verbindet, und
wobei die Busanordnung (10) derart ausgelegt ist, dass die erste Teilnehmeranordnung (23) in einer Betriebsphase (B, B', B") vom Bus (14) abgekoppelt werden kann, und die Busanordnung (10) nicht derart ausgelegt ist, dass der erste Teilnehmer (11) in einer Betriebsphase (B, B', B") vom Bus (14) abgekoppelt werden kann.

2. Busanordnung nach Anspruch 1,
wobei der Koordinator (13) ausgelegt ist, eine erste Fehlermeldung abzugeben oder/ und die Busanordnung (10) in einen sicheren Zustand zu versetzen, falls der erste Teilnehmer (11) zu einem ersten Zeitpunkt einer Betriebsphase (B, B', B") aktiv ist und zu einem zweiten Zeitpunkt in derselben Betriebsphase (B, B', B") entfernt oder inaktiv ist, wobei der zweite Zeitpunkt nach dem ersten Zeitpunkt liegt.

3. Busanordnung nach Anspruch 1 oder 2,
wobei der Koordinator (13) ausgelegt ist, ein Abkoppeln des zweiten Teilnehmers (12) zu registrieren, falls der zweite Teilnehmer (11) zu einem ersten Zeitpunkt einer Betriebsphase (B, B', B") aktiv ist und zu einem zweiten Zeitpunkt in derselben Betriebsphase (B, B', B") entfernt oder inaktiv ist, wobei der zweite Zeitpunkt nach dem ersten Zeitpunkt liegt.

4. Busanordnung nach einem der Ansprüche 1 bis 3,
wobei der erste Teilnehmer (11) einen ersten nicht-flüchtigen permanenten Speicher (55) aufweist, in dem eine erste Seriennummer gespeichert ist, und der zweite Teilnehmer (12) einen zweiten nicht-flüchtigen permanenten Speicher (57) aufweist, in dem eine zweite Seriennummer gespeichert ist, sowie
der Koordinator (13) ausgelegt ist, in einer Konfigurationsphase (K) dem ersten Teilnehmer (11) eine erste Teilnehmeradresse und dem zweiten Teilnehmer (12) eine zweite Teilnehmeradresse zuzuweisen, die erste und die zweite Seriennummer abzufragen und die erste und die zweite Seriennummer in einem nicht-flüchtigen semi-permanenten Speicher (53) des Koordinators (13) zu speichern.

5. Busanordnung nach Anspruch 4,
wobei der Koordinator (13) ausgelegt ist, in einer Wiederanlaufphase (W), die der Konfigurationsphase (K) folgt, eine Verbindung zum ersten und zum zweiten Teilnehmer (11, 12) aufzunehmen, die erste und die zweite Seriennummer abzufragen, die abgefragte erste und zweite Seriennummer mit der im nicht-flüchtigen semi-permanenten Speicher (53) gespeicherten ersten und zweiten Seriennummer zu vergleichen und eine Fehlermeldung abzugeben, wenn eine oder beide abgefragte Seriennummern von den gespeicherten Seriennummern abweichen.

6. Busanordnung nach Anspruch 4 oder 5,
wobei der erste Teilnehmer (11) in einer Ausschaltphase (A), die zwischen der Konfigurationsphase (K) und einer weiteren Konfigurationsphase (K') liegt, gegen einen weiteren ersten Teilnehmer ausgetauscht wird, und
wobei der Koordinator (13) ausgelegt ist, in der weiteren Konfigurationsphase (K') eine Verbindung zum weiteren ersten Teilnehmer aufzunehmen, eine Seriennummer des weiteren ersten Teilnehmer abzufragen und im nicht-flüchtigen semi-permanenten Speicher (53) zu speichern.

7. Busanordnung nach Anspruch 6,
wobei der Koordinator (13) einen Schalter (49) umfasst und ausgelegt ist, die weitere Konfigurationsphase (K') nach Betätigung des Schalters (49) durchzuführen.

8. Busanordnung nach einem der Ansprüche 4 bis 7,
wobei die Busanordnung (10) einen zusätzlichen Teilnehmer umfasst, der in der Konfigurationsphase (K) am Bus (14) zwischen dem Koordinator (13) und dem ersten Teilnehmer (11) angeschlossen ist und nach der Konfigurationsphase (K) entfernt wird, und
der Koordinator (13) in einer Wiederanlaufphase (W) nach der Konfigurationsphase (K) ausgelegt ist, den ersten Teilnehmer (11) über die erste Seriennummer zu adressieren und ihm eine erste Teilnehmeradresse zuzuweisen.

9. Busanordnung nach einem der Ansprüche 1 bis 8,
wobei der Koordinator (13) ausgelegt ist, in einer Konfigurationsphase (K) über die erste Signalleitung (17) den ersten Teilnehmer (11) zu aktivieren und über die mindestens eine Busleitung (21) ein Telegramm abzusenden, das eine erste Teilnehmeradresse enthält, und
der erste Teilnehmer (11) ausgelegt ist, die erste Teilnehmeradresse in einem ersten flüchtigen Speicher (54) des ersten Teilnehmers (11) zu speichern.

10. Busanordnung nach Anspruch 9,
wobei der erste Teilnehmer (11) ausgelegt ist, in der Konfigurationsphase (K) über die zweite Signalleitung (18) den zweiten Teilnehmer (12) zu aktivieren,
der Koordinator (13) ausgelegt ist, über die mindestens eine Busleitung (21) ein Telegramm, das die zweite Teilnehmeradresse enthält, abzusenden, und
der zweite Teilnehmer (12) ausgelegt ist, die zweite Teilnehmeradresse in einem zweiten flüchtigen Speicher (56) des zweiten Teilnehmers (12) zu speichern.

11. Verfahren zum Betreiben einer Busanordnung,
wobei eine erste Teilnehmeranordnung (23) von einem Bus (14) in einer Betriebsphase (B, B', B") abgekoppelt wird und ein Koordinator (13) weiter die Busanordnung (10) betreibt,
wobei beim Abkoppeln eines ersten Teilnehmers (11) vom Bus (14) in einer Betriebsphase (B, B', B") der Koordinator (13) eine erste Fehlermeldung abgibt und/oder die Busanordnung (10) in einen sicheren Zustand versetzt,
wobei die Busanordnung (10) den Koordinator (13), den Bus (14), den ersten Teilnehmer (11) und die erste Teilnehmeranordnung (23) mit einem zweiten Teilnehmer (12) umfasst, der Bus (14) den Koordinator (13) mit dem ersten und dem zweiten Teilnehmer (11, 12) koppelt sowie der erste Teilnehmer (11) zwischen dem Koordinator (13) und dem zweiten Teilnehmer (12) am Bus (14) angeordnet ist, und wobei der Bus (14) eine erste Signalleitung (17), die den ersten Teilnehmer (11) und den Koordinator (13) koppelt, eine zweite Signalleitung (18), die den zweiten Teilnehmer (12) an den ersten Teilnehmer (11) anschließt, und mindestens eine Busleitung (21) umfasst, die den Koordinator (13) mit dem ersten und dem zweiten Teilnehmer (11, 12) verbindet.

## Claims

1. Bus arrangement, comprising
- a coordinator (13),
- a first subscriber (11),
- a first subscriber arrangement (23) having a second subscriber (12) and
- a bus (14), which couples the coordinator (13) to the first and the second subscriber (11, 12), wherein the first subscriber (11) is arranged between the coordinator (13) and the second subscriber (12) at the bus (14),
wherein the bus (14) comprises a first signal line (17), which couples the first subscriber (11) and the coordinator (13), a second signal line (18), which connects the second subscriber (12) to the first subscriber (11), and at least one bus line (21), which connects the coordinator (13) to the first and the second subscriber (11, 12), and
wherein the bus arrangement (10) is designed such that the first subscriber arrangement (23) in an operation phase (B, B', B") can be decoupled from the bus (14), and the bus arrangement (10) is not designed such that the first subscriber (11) in an operation phase (B, B', B") can be decoupled from the bus (14).

2. Bus arrangement according to claim 1
wherein the coordinator (13) is designed to emit a first error message or/and to set the bus arrangement (10) in a safe state in case that the first subscriber (11) is active at a first point in time of an operation phase (B, B', B") and is removed or inactive at a second point in time in the same operation phase (B, B', B"), wherein the second point in time lies after the first point in time.

3. Bus arrangement according to claim 1 or 2,
wherein the coordinator (13) is designed to register a decoupling of the second subscriber (12) in case that the second subscriber (11) is active at a first point in time in an operation phase (B, B', B") and is removed or inactive at a second point in time in the same operation phase (B, B', B"), wherein the second point in time lies after the first point in time.

4. Bus arrangement according to any of claims 1 to 3,
wherein the first subscriber (11) has a first non-volatile permanent memory (55) in which a first serial number is stored, and the second subscriber (12) has a second non-volatile permanent memory (57) in which a second serial number is stored, and
the coordinator (13) is designed to assign to the first subscriber (11) a first subscriber address and to the second subscriber (12) a second subscriber address in a configuration phase (K), to retrieve the first and the second serial number and to store the first and the second serial number in a non-volatile semi-permanent memory (53) of the coordinator (13).

5. Bus arrangement according to claim 4,
wherein the coordinator (13) is designed, in a restart phase (W) which follows the configuration phase (K), to establish a connection to the first and to the second subscriber (11, 12), to retrieve the first and the second serial number, to compare the retrieved first and second serial number with the first and second serial number stored in the non-volatile semi-permanent memory (53) and to emit an error message when one or both of the retrieved serial numbers deviate from the stored serial numbers.

6. Bus arrangement according to claim 4 or 5,
wherein the first subscriber (11), in a deactivation phase (A) which lies between the configuration phase (K) and a further configuration phase (K'), is exchanged with a further first subscriber, and
wherein the coordinator (13) is designed to establish a connection to the further first subscriber in the further configuration phase (K'), to retrieve a serial number of the further first subscriber and to store it in the non-volatile semi-permanent memory (53).

7. Bus arrangement according to claim 6,
wherein the coordinator (13) comprises a switch (49) and is designed to carry out the further configuration phase (K') after actuation of the switch (49).

8. Bus arrangement according to any of claims 4 to 7,
wherein the bus arrangement (10) comprises an additional subscriber, which is connected to the bus (14) between the coordinator (13) and the first subscriber (11) in the configuration phase (K) and is removed after the configuration phase (K), and
the coordinator (13) is designed to address the first subscriber (11) via the first serial number and to assign to it a first subscriber address in a restart phase (W) following the configuration phase (K).

9. Bus arrangement according to any of claims 1 to 8,
wherein the coordinator (13) is designed to activate the first subscriber (11) via the first signal line (17) in a configuration phase (K) and to send a telegram via the at least one bus line (21) which contains a first subscriber address, and
the first subscriber (11) is designed to store the first subscriber address in a first volatile memory (54) of the first subscriber (11).

10. Bus arrangement according to claim 9,
wherein the first subscriber (11) is designed to activate the second subscriber (12) via the second signal line (18) in the configuration phase (K),
the coordinator (13) is designed to send via the at least one bus line (21) a telegram which contains the second subscriber address, and
the second subscriber (12) is designed to store the second subscriber address in a second volatile memory (56) of the second subscriber (12).

11. Method for operating a bus arrangement,
wherein a first subscriber arrangement (23) is decoupled from a bus (14) in an operation phase (B, B', B") and a coordinator (13) further operates the bus arrangement (10),
wherein at the decoupling of a first subscriber (11) from the bus (14) in an operation phase (B, B', B") the coordinator (13) emits a first error message and/or transfers the bus arrangement (10) into a safe state,
wherein the bus arrangement (10) comprises the coordinator (13), the bus (14), the first subscriber (11) and the first subscriber arrangement (23) having a second subscriber (12), the bus (14) couples the coordinator (13) to the first and the second subscriber (11, 12) and the first subscriber (11) is disposed between the coordinator (13) and the second subscriber (12) at the bus (14), and wherein the bus (14) comprises a first signal line (17), which couples the first subscriber (11) and the coordinator (13), a second signal line (18), which connects the second subscriber (12) to the first subscriber (11), and at least one bus line (21), which connects the coordinator (13) to the first and the second subscriber (11, 12).

## Revendications

1. Ensemble de bus comprenant
- un coordinateur (13),
- un premier abonné (11),
- un premier ensemble d'abonnés (23) avec un second abonné (12) et
- un bus (14) qui couple le coordinateur (13) aux premier et second abonnés (11, 12), le premier abonné (11) étant agencé sur le bus (14) entre le coordinateur (13) et le second abonné (12),
dans lequel le bus (14) comprend une première ligne de signal (17) qui couple le premier abonné (11) et le coordinateur (13), une seconde ligne de signal (18) qui raccorde le second abonné (12) au premier abonné (11), et au moins une ligne de bus (21) qui relie le coordinateur (13) aux premier et second abonnés (11, 12), et
dans lequel l'ensemble de bus (10) est conçu de telle sorte que le premier ensemble d'abonnés (23) peut être découplé du bus (14) dans une phase d'exploitation (B, B', B"), et l'ensemble de bus (10) n'est pas conçu de sorte que le premier abonné (11) peut être découplé du bus (14) dans une phase d'exploitation (B, B', B").

2. Ensemble de bus selon la revendication 1,
dans lequel le coordinateur (13) est conçu pour émettre un premier message d'erreur ou/et mettre l'ensemble de bus (10) dans un état sécurisé, au cas où le premier abonné (11) est actif à un premier moment d'une phase d'exploitation (B, B', B") et est retiré ou inactif à un second moment de la même phase d'exploitation (B, B', B"), le second moment étant postérieur au premier moment.

3. Ensemble de bus selon les revendications 1 ou 2,
dans lequel le coordinateur (13) est conçu pour enregistrer un découplage du second abonné (12), au cas où le second abonné (11) est actif à un premier moment d'une phase d'exploitation (B, B', B") et est retiré ou inactif à un second moment de la même phase d'exploitation (B, B', B"), le second moment étant postérieur au premier moment.

4. Ensemble de bus selon l'une quelconque des revendications 1 à 3,
dans lequel le premier abonné (11) présente une première mémoire permanente non volatile (55), dans laquelle est enregistré un premier numéro de série, et le second abonné (12) présente une seconde mémoire permanente non volatile (57) dans laquelle est enregistré un second numéro de série, de même que le coordinateur (13) est conçu pour attribuer dans une phase de configuration (K) une premier adresse d'abonné au premier abonné (11) et une seconde adresse d'abonné au second abonné (12), pour interroger les premier et second numéros de série et pour enregistrer les premier et second numéros de série dans une mémoire semi-permanente non volatile (53) du coordinateur (13).

5. Ensemble de bus selon la revendication 4,
dans lequel le coordinateur (13) est conçu pour établir dans une phase de reprise (W) consécutive à la phase de configuration (K) une connexion avec le premier et le second abonnés (11, 12), pour interroger le premier et le second numéros de série, comparer les premier et second numéros de série interrogés aux premier et second numéros de série enregistrés dans la mémoire semi-permanente non volatile (53) et émettre un message d'erreur si un ou les deux numéro(s) de série interrogé(s) diverge(nt) des numéros de série enregistrés.

6. Ensemble de bus selon les revendications 4 ou 5,
dans lequel le premier abonné (11) dans une phase de mise hors circuit (A) située entre la phase de configuration (K) et une autre phase de configuration (K') est remplacé par un autre premier abonné, et
dans lequel le coordinateur (13) est conçu pour établir une connexion dans l'autre phase de configuration (K') avec l'autre premier abonné, interroger un numéro de série de l'autre premier abonné et l'enregistrer dans la mémoire semi-permanente non volatile (53).

7. Ensemble de bus selon la revendication 6,
dans lequel le coordinateur (13) comprend un commutateur (49) et est conçu pour réaliser l'autre phase de configuration (K') après actionnement du commutateur (49).

8. Ensemble de bus selon l'une quelconque des revendications 4 à 7,
dans lequel l'ensemble de bus (10) comprend un abonné supplémentaire qui est raccordé dans la phase de configuration (K) au bus (14) entre le coordinateur (13) et le premier abonné (11) et est retiré après la phase de configuration (K), et
le coordinateur (13) est conçu dans une phase de reprise (W) après la phase de configuration (K) pour adresser le premier abonné (11) via le premier numéro de série et lui attribuer une première adresse d'abonné.

9. Ensemble de bus selon l'une quelconque des revendications 1 à 8,
dans lequel le coordinateur (13) est conçu pour activer le premier abonné (11) dans une phase de configuration (K) via la première ligne de signal (17) et émettre via la au moins une ligne de bus (21) un télégramme contenant une première adresse d'abonné, et
le premier abonné (11) est conçu pour enregistrer la première adresse d'abonné dans une première mémoire volatile (54) du premier abonné (11).

10. Ensemble de bus selon la revendication 9,
dans lequel le premier abonné (11) est conçu pour activer le second abonné (12) dans la phase de configuration (K) via la seconde ligne de signal (18),
le coordinateur (13) est conçu pour émettre via la au moins une ligne de bus (21) un télégramme contenant la seconde adresse d'abonné, et
le second abonné (12) est conçu pour enregistrer la seconde adresse d'abonné dans une seconde mémoire volatile (56) du second abonné (12).

11. Procédé d'exploitation d'un ensemble de bus,
dans lequel un premier ensemble d'abonnés (23) est découplé d'un bus (14) dans une phase d'exploitation (B, B', B") et un coordinateur (13) continue à exploiter l'ensemble de bus (10),
dans lequel lorsqu'un premier abonné (11) est découplé du bus (14) dans une phase d'exploitation (B, B', B"), le coordinateur (13) émet un premier message d'erreur et/ou met l'ensemble de bus (10) dans un état sécurisé,
dans lequel l'ensemble de bus (10) comprend le coordinateur (13), le bus (14), le premier abonné (11) et le premier ensemble d'abonnés (23) avec un second abonné (12), le bus (14) couple le coordinateur (13) aux premier et second abonnés (11, 12) de même que le premier abonné (11) est agencé sur le bus (14) entre le coordinateur (13) et le second abonné (12), et le bus (14) comprenant une première ligne de signal (17) qui couple le premier abonné (11) et le coordinateur (13), une seconde ligne de signal (18) qui raccorde le second abonné (12) au premier abonné (11) et au moins une ligne de bus (21) qui relie le coordinateur (13) aux premier et second abonnés (11, 12).
